(19) Europäisches Patentamt
European Patent Office
Office européen des brevets

(11) EP 2 375 744 A1

(12) EUROPEAN PATENT APPLICATION

(43) Date of publication:
**12.10.2011 Bulletin 2011/41**

(51) Int Cl.:
***H04N 7/26*** *(2006.01)*

(21) Application number: **10003872.8**

(22) Date of filing: **12.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Panasonic Corporation**
**Kadoma-shi**
**Osaka 571-8501 (JP)**

(72) Inventors:
- **Wittmann, Steffen**
**63225 Langen (DE)**
- **Shibahara, Youji**
**Chuo-ku**
**Osaka 540-6207 (JP)**
- **Nishi, Takahiro**
**Chuo-ku**
**Osaka 540-6207 (JP)**

(74) Representative: **Grünecker, Kinkeldey, Stockmair & Schwanhäusser**
**Anwaltssozietät**
**Leopoldstrasse 4**
**80802 München (DE)**

# (54) Complexity reduction for 1/8-pel interpolation

(57) The present invention relates to a method for interpolation of sub-samples for encoding and decoding an image signal and to corresponding apparatuses therefore. In particular, the 1/8-pel positions are interpolated by filtering only the half-pel positions and the full-pel positions but not the quarter-pel positions. This provides higher uniformity of filtering and reduces the complexity of such an interpolation filtering.

Fig. 8

C3
Ca
Cb
Cc
C4
Ead
Ebe
Cd
Ce
Cf
Cg
Cd'
Eeh
Efi
Ch
Ci
Cj
Ck
Ch'
Cl
Cm
Cn
Co
Cl'
D3
Ca'
Cb'
Cc'
D4

EP 2 375 744 A1

## Description

The present invention relates to interpolation filtering employed in video encoding and decoding. In particular, the present invention relates to 1/8-pel interpolation.

BACKGROUNG OF THE INVENTION

At present, the majority of standardized video coding algorithms are based on hybrid video coding. Hybrid video coding methods typically combine several different lossless and lossy compression schemes in order to achieve the desired compression gain. Hybrid video coding is also the basis for ITU-T standards (H.26x standards such as H.261, H.263) as well as ISO/IEC standards (MPEG-X standards such as MPEG-1, MPEG-2, and MPEG-4). The most recent and advanced video coding standard is currently the standard denoted as H.264/MPEG-4 advanced video coding (AVC) which is a result of standardization efforts by joint video team (JVT), a joint team of ITU-T and ISO/IEC MPEG groups.

A video signal input to an encoder is a sequence of images called frames, each frame being a two-dimensional matrix of pixels. All the above-mentioned standards based on hybrid video coding include subdividing each individual video frame into smaller blocks consisting of a plurality of pixels. Typically, a macroblock (usually denoting a block of 16 x 16 pixels) is the basic image element, for which the encoding is performed. However, various particular encoding steps may be performed for smaller image elements, denoted submacroblocks or simply blocks and having the size of, for instance, 8 x 8, 4 x 4, 16 x 8, etc.

Typically, the encoding steps of a hybrid video coding include a spatial and/or a temporal prediction. Accordingly, each block to be encoded is first predicted using either the blocks in its spatial neighborhood or blocks from its temporal neighborhood, i.e. from previously encoded video frames. A block of differences between the block to be encoded and its prediction, also called block of prediction residuals, is then calculated. Another encoding step is a transformation of a block of residuals from the spatial (pixel) domain into a frequency domain. The transformation aims at reducing the correlation of the input block. Further encoding step is quantization of the transform coefficients. In this step the actual lossy (irreversible) compression takes place. Usually, the compressed transform coefficient values are further compacted (losslessly compressed) by means of an entropy coding. In addition, side information necessary for reconstruction of the encoded video signal is encoded and provided together with the encoded video signal. This is for example information about the spatial and/or temporal prediction, amount of quantization, etc.

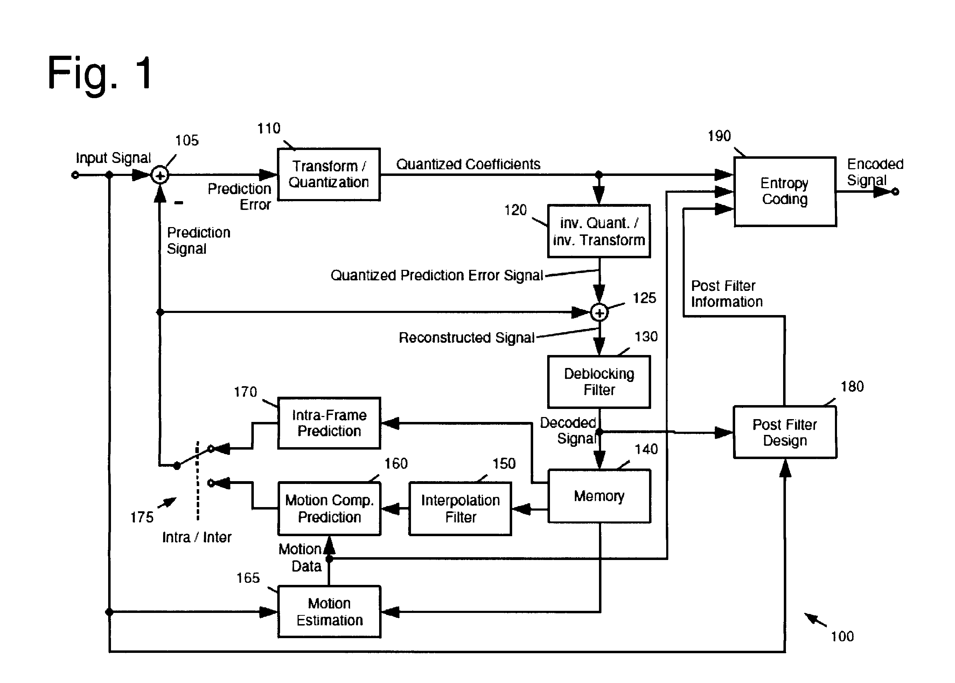

Figure 1 is an example of a typical H.264/MPEG-4 AVC standard compliant video encoder 100. The H. 264/MPEG-4 AVC standard combines all above-mentioned encoding steps. A subtractor 105 first determines differences between a current block to be encoded of an input video image (input signal) and a corresponding prediction block, which is used for the prediction of the current block to be encoded. In H.264/MPEG-4 AVC, the prediction signal is obtained either by a temporal or by a spatial prediction. The type of prediction can be varied on a per frame basis or on a per macroblock basis. Macroblocks predicted using temporal prediction are called inter-encoded and macroblocks predicted using spatial prediction are called intra-encoded. The type of prediction for a video frame can be set by the user or selected by the video encoder so as to achieve a possibly high compression gain. In accordance with the selected type of prediction, an intra/inter switch 175 provides corresponding prediction signal to the subtractor 105. The prediction signal using temporal prediction is derived from the previously encoded images, which are stored in a memory 140. The prediction signal using spatial prediction is derived from the values of boundary pixels in the neighboring blocks, which have been previously encoded, decoded, and stored in the memory 140. The memory unit 140 thus operates as a delay unit that allows a comparison between current signal values to be encoded and the prediction signal values generated from previous signal values. The memory 140 can store a plurality of previously encoded video frames. The difference between the input signal and the prediction signal, denoted prediction error or residual, is transformed resulting in coefficients, which are quantized 110. Entropy encoder 190 is then applied to the quantized coefficients in order to further reduce the amount of data in a lossless way. This is mainly achieved by applying a code with code words of variable length wherein the length of a code word is chosen based on the probability of occurrence thereof.

Intra-encoded images (called also I-type images or I frames) consist solely of macroblocks that are intra-encoded, i.e. intra-encoded images can be decoded without reference to any other previously decoded image. The intra-encoded images provide error resilience for the encoded video sequence since they refresh the video sequence from errors possibly propagated from frame to frame due to temporal prediction. Moreover, I frames enable a random access within the sequence of encoded video images. Intra-fame prediction uses a predefined set of intra-prediction modes, which basically predict the current block using the boundary pixels of the neighboring blocks already encoded. The different modes of spatial intra-prediction refer to different directions of the applied two-dimensional prediction. This allows efficient spatial intra-prediction in the case of various edge directions. The prediction signal obtained by such an intra-prediction is then subtracted from the input signal by the subtractor 105 as described above. In addition, spatial intra-prediction mode information is entropy encoded and provided together with the encoded video signal.

Within the video encoder 100, a decoding unit is incorporated for obtaining a decoded video signal. In compliance with the encoding steps, the decoding steps include inverse quantization and inverse transformation 120. The decoded prediction error signal differs from the original prediction error signal due to the quantization error, called also quantization noise. A reconstructed signal is then obtained by adding 125 the decoded prediction error signal to the prediction signal. In order to maintain the compatibility between the encoder side and the decoder side, the prediction signal is obtained based on the encoded and subsequently decoded video signal which is known at both sides the encoder and the decoder. Due to the quantization, quantization noise is superposed to the reconstructed video signal. Due to the block-wise coding, the superposed noise often has blocking characteristics, which result, in particular for strong quantization, in visible block boundaries in the decoded image. Such blocking artifacts have a negative effect upon human visual perception. In order to reduce these artifacts, a deblocking filter 130 is applied to every reconstructed image block. The deblocking filter is applied to the reconstructed signal, which is the sum of the prediction signal and the quantized prediction error signal. The video signal after deblocking is the decoded signal, which is generally displayed at the decoder side (if no post filtering is applied). The deblocking filter of H.264/MPEG-4 AVC has the capability of local adaptation. In the case of a high degree of blocking noise, a strong (narrow-band) low pass filter is applied, whereas for a low degree of blocking noise, a weaker (broad-band) low pass filter is applied. The strength of the low pass filter is determined by the prediction signal and by the quantized prediction error signal. Deblocking filter generally smoothes the block edges leading to an improved subjective quality of the decoded images. Moreover, since the filtered part of an image is used for the motion compensated prediction of further images, the filtering also reduces the prediction errors, and thus enables improvement of coding efficiency.

Intra-coded macroblocks are filtered before displaying, but intra prediction is carried out using the unfiltered reconstructed macroblocks.

In order to be decoded, inter-encoded images require also the previously encoded and subsequently decoded image(s). Temporal prediction may be performed uni-directionally, i.e., using only video frames ordered in time before the current frame to be encoded, or bidirectionally, i.e., using also video frames following the current frame. Uni-directional temporal prediction results in inter-encoded images called P frames; bi-directional temporal prediction results in inter-encoded images called B frames. In general, an inter-encoded image may comprise any of P-, B-, or even I-type macroblocks. An inter-encoded macroblock (P- or B- macroblock) is predicted by employing motion compensated prediction 160. First, a best-matching block is found for the current block within the previously encoded and decoded video frames by a motion estimator 165. The best-matching block then becomes a prediction signal and the relative displacement (motion) between the current block and its best match is then signalized as motion data in the form of three-dimensional motion vectors within the side information provided together with the encoded video data. The three dimensions consist of two spatial dimensions and one temporal dimension. In order to optimize the prediction accuracy, motion vectors may be determined with a spatial sub-pixel resolution e.g. half pixel or quarter pixel resolution. A motion vector with spatial sub-pixel resolution may point to a spatial position within an already decoded frame where no real pixel value is available, i.e. a sub-pixel position. Hence, spatial interpolation of such pixel values is needed in order to perform motion compensated prediction. This is achieved by interpolation filter 150. According to the H.264/MPEG-4 AVC standard, a six-tap Wiener interpolation filter with fixed filter coefficients and a bilinear filter are applied in order to obtain pixel values for sub-pixel positions in vertical and horizontal directions separately.

For both, the intra- and the inter-encoding modes, the differences between the current input signal and the prediction signal are transformed and quantized by the unit 110, resulting in the quantized coefficients. Generally, an orthogonal transformation such as a two-dimensional discrete cosine transformation (DCT) or an integer version thereof is employed since it reduces the correlation of the natural video images efficiently. After the transformation, lower frequency components are usually more important for image quality then high frequency components so that more bits can be spent for coding the low frequency components than the high frequency components. In the entropy coder, the two-dimensional matrix of quantized coefficients is converted into a one-dimensional array. Typically, this conversion is performed by a so-called zig-zag scanning, which starts with the DC-coefficient in the upper left corner of the two-dimensional array and scans the two-dimensional array in a predetermined sequence ending with an AC coefficient in the lower right corner. As the energy is typically concentrated in the left upper part of the two-dimensional matrix of coefficients, corresponding to the lower frequencies, the zig-zag scanning results in an array where usually the last values are zero. This allows for efficient encoding using run-length codes as a part of/before the actual entropy coding.

H.264/MPEG-4 AVC employs scalar quantization 110, which can be controlled by a quantization parameter (QP) and a customizable quantization matrix (QM). One of 52 quantizers is selected for each macroblock by the quantization parameter. In addition, quantization matrix is specifically designed to keep certain frequencies in the source to avoid losing image quality. Quantization matrix in H.264/MPEG-4 AVC can be adapted to the video sequence and signalized together with the video data.

The H.264/MPEG-4 AVC includes two functional layers, a Video Coding Layer (VCL) and a Network Abstraction Layer (NAL). The VCL provides the encoding functionality as briefly described above. The NAL encapsulates information elements into standardized units called NAL units according to their further application such as transmission over a channel or storing in storage. The information elements are, for instance, the encoded prediction error signal or other information necessary for the decoding of the video signal such as type of prediction, quantization parameter, motion vectors, etc. There are VCL NAL units containing the compressed video data and the related information, as well as non-VCL units encapsulating additional data such as parameter set relating to an entire video sequence, or a Supplemental Enhancement Information (SEI) providing additional information that can be used to improve the decoding performance.

In order to improve the image quality, a so-called post filter 280 may be applied at the decoder side 200. The H.264/MPEG-4 AVC standard allows the sending of post filter information for such a post filter via the SEI message. The post filter information is determined at the encoder side by means of a post filter design unit 180, which compares the locally decoded signal and original input signal. In general, the post filter information is an information allowing decoder to set up an appropriate filter. It may include directly the filter coefficients or another information enabling setting up the filter, such as cross-correlation information related to the uncompressed signal, such as cross-correlation information between the original input image and the decoded image or between the decoded image and the quantization noise. This cross-correlation information can be used to calculate the filter coefficients. The filter information, which is output by the post filter design unit 180 is also fed to the entropy coding unit 190 in order to be encoded and inserted into the encoded signal. At the decoder, the filter information may be used by a post filter, which is applied on the decoded signal before displaying.

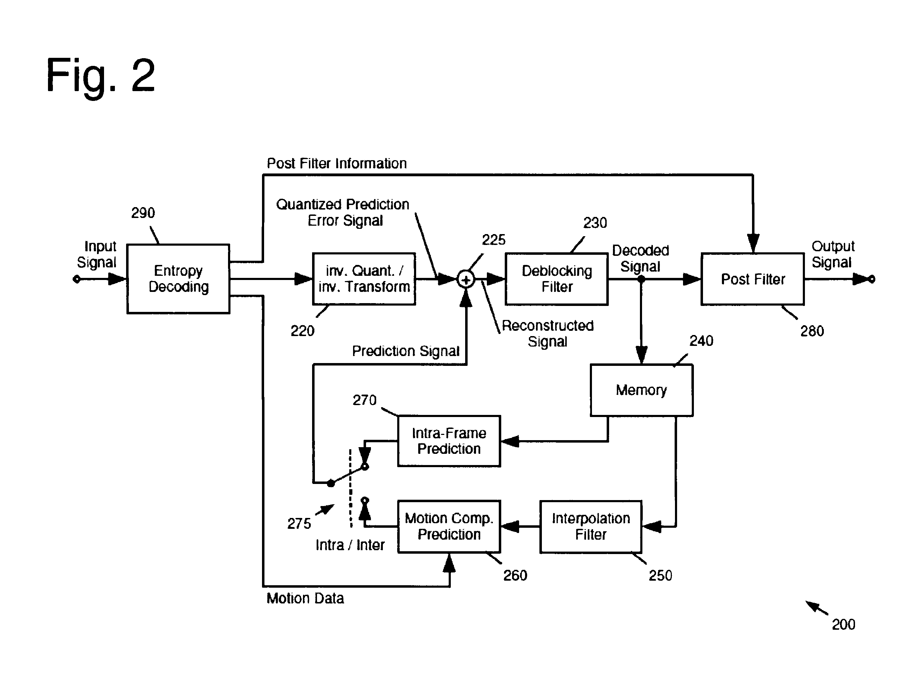

Figure 2 illustrates an example decoder 200 compliant with the H.264/MPEG-4 AVC video coding standard. The encoded video signal (input signal to the decoder) first passes to entropy decoder 290, which decodes the quantized coefficients, the information elements necessary for decoding such as motion data, mode of prediction etc., and the post filter information. The quantized coefficients are inversely scanned in order to obtain a two-dimensional matrix, which is then fed to inverse quantization and inverse transformation 220. After inverse quantization and inverse transformation, a decoded (quantized) prediction error signal is obtained, which corresponds to the differences obtained by subtracting the prediction signal from the signal input to the encoder in the case no quantization noise is introduced.

The prediction signal is obtained from either a temporal or a spatial prediction 260 and 270, respectively, which are switched 275 in accordance with a received information element signalizing the prediction applied at the encoder. The decoded information elements further include the information necessary for the prediction such as prediction type in the case of intra-prediction and motion data in the case of motion compensated prediction. Depending on the current value of the motion vector, interpolation of pixel values may be needed in order to perform the motion compensated prediction. This interpolation is performed by an interpolation filter 250. The quantized prediction error signal in the spatial domain is then added by means of an adder 225 to the prediction signal obtained either from the motion compensated prediction 260 or intra-frame prediction 270. The reconstructed image may be passed through a deblocking filter 230 and the resulting decoded signal is stored in the memory 240 to be applied for temporal or spatial prediction of the following blocks.

The post filter information is fed to a post filter 280, which sets up a post filter accordingly. The post filter is then applied to the decoded signal in order to further improve the image quality. Thus, the post filter is capable of adapting to the properties of the video signal entering the encoder.

The efficiency of coding essentially depends on the accuracy of the prediction. On the other hand, the accuracy of the temporal prediction depends on the accuracy of the motion vectors. The accuracy of motion vectors may be increased by employing interpolation filters with higher resolutions. Moreover, the performance of interpolation filtering may be improved by employing an adaptive filter for the interpolation filter 150, 250. In general, the suitability of a filter depends on the image to be filtered. The coefficients of the interpolation filter may thus be designed as Wiener filter coefficients. The Wiener filter is designed to minimize the mean square error between an input signal, which is the desired signal, and the signal after having applied the filter. The solution of a Wiener filter requires calculating the autocorrelation of the filtered signal and the cross correlation between the input signal and the filtered signal. Further details on adaptive filter design can be found for example in S. Haykin, "Adaptive Filter Theory", Fourth Edition, Prentice Hall Information and System Sciences Series, Prentice Hall, 2002. Example of a separable adaptive interpolation filter on a basis of Wiener filter for video coding can be found in S. Wittmann, T. Wedi "Separable adaptive interpolation filter for video coding", Proc. ICIP2008, IEEE International Conference on Image Processing, San Diego, California, USA, October 2008 or in EP 1 983 759.

However, increasing the accuracy of the interpolation filter by increasing its resolution leads to higher complexity of the filtering, which poses additional requirements on the hardware and may also increase the computational time. This is a disadvantage, especially for decoders. Moreover, interpolation filters with higher precisions typically use already interpolated samples which may lead to high computational complexity of the interpolation and to overfiltering, which may further cause blurring of the interpolated image.

## SUMMARY OF THE INVENTION

The aim of the present invention is to provide an efficient approach to interpolation filtering with a reduced complexity. It would be advantageous to further reduce the risk of overfiltering.

This is achieved by the subject matter of the independent claims.

Advantageous embodiments of the invention are subject to the dependent claims.

It is the particular approach of the present invention to interpolate 1/8-pel positions only from half-pel positions or full-pel positions, but not from the quarter pel positions.

This enables reducing the complexity of 1/8-pel interpolation filtering, increasing uniformity and thus avoiding overfiltering which could otherwise lead to blurring of the interpolated image.

In accordance with a first aspect of the present invention, a method is provided for interpolation of sub-pel positions in an image block of pixels, wherein each pixel represents a full-pel position. The method comprises the step of interpolating half-pel positions or quarter-pel positions in the block of pixels by filtering the values on full-pel positions in said block of pixels, and the step of interpolating each 1/8-pel position in said block of pixels by a filtering of only full-pel positions and/or half-pel positions in said block of pixels.

According to another aspect of the present invention, an apparatus is provided for interpolation of sub-pel positions in an image block of pixels, wherein each pixel represents a full-pel position. The apparatus comprises a first interpolation unit for interpolating half-pel positions or quarter-pel positions in a block of pixels by filtering the values on full-pel positions in said block of pixels. The apparatus further comprises a 1/8-pel interpolation unit for interpolating each 1/8-pel position in said block of pixels by bilinear filtering of predefined full-pel positions and/or half-pel positions in said block of pixels.

Preferably, the step of interpolating 1/8-pel positions includes interpolating each 1/8-pel position located in a same row with full-pel positions and/or half-pel positions by weighted averaging of two nearest positions in the same row, each of the two nearest positions being either a full-pel position or a half-pel position, and interpolating each 1/8-pel position located in a same column with full-pel positions and/or half-pel positions by weighted averaging of two nearest positions in the same column, each of the two nearest positions being either a full-pel position or a half-pel position. In particular, the weighted averaging is weighted by the distance between the 1/8-pel position to be interpolated and the respective full-pel position or half-pel position to be filtered.

Preferably, the interpolating 1/8-pel positions includes interpolating each 1/8-pel position located in a same diagonal with full-pel positions and/or half-pel positions by weighted averaging of two nearest positions in the same diagonal, each of the two nearest positions being either a full-pel position or a half-pel position.

Preferably, the interpolating 1/8-pel positions includes interpolating each 1/8-position, which is located neither in same row, nor in same column, nor in same diagonal as any full-pel position and/or half-pel position, by weighted averaging of four nearest positions, each of the four nearest positions being either a full-pel position or a half-pel position.

In particular, advantageously, the interpolating of half-pel positions and/or quarter-pel positions in the block of pixels is performed by using a separable adaptive interpolation filter. Employing an adaptive interpolation filter enables adapting to the features of the image signal to be encoded/decoded and thus leads to a more accurate prediction. The adaptive filter coefficients may be determined as a Wiener filter. Preferably, the filter coefficients are determined at the encoder, where also the input image signal is available and signaled to the decoder within the coded bitstream including also the encoded video data. In general, the decoder does not need the complete filter coefficients and an information that allows a decoder to set-up the adaptive filter by calculating the filter coefficients may also be sent. This is, for instance, cross-correlation between the original and the filtered signal.

However, the present invention is not limited to using adaptive filters and the quarter-pel positions and/or the half-pel positions may also be interpolated by a filter with fixed coefficients. This provides lower complexity and does not require embedding the filter data into the bitstream. The adaptive interpolation filter may also be a non-separable 2D filter.

Preferably, the step of interpolating each 1/8-pel position is performed using the already interpolated half-pel positions. This means that the filtering of ½-pel and ¼-pel positions is performed in one step and after this step, the bilinear filtering for obtaining the 1/8-pel positions is performed, which uses the already interpolated sub-pel values. However, the present invention is not limited to such a two-step implementation. The quarter-pel and the 1/8-pel positions interpolation may also be performed in parallel. Alternatively, the interpolation of all sub-pel positions may be performed in parallel and independently of each other.

According to another aspect of the present invention, a method is provided for decoding an image block in a video sequence of images from a bitstream comprising the steps of: decoding from the bitstream a prediction error block and a motion vector with 1/8-pel resolution; determining a prediction block by predicting the image block to be decoded as a block in a reference image on the position specified by the extracted motion vector, including interpolating the sub-pel positions of blocks in the reference image using any method described above; and reconstructing the image block by adding the prediction block and the prediction error block.

According to still another aspect of the present invention, a method is provided for encoding an image block in a video sequence of images to a bitstream comprising the steps of: determining a prediction block by predicting the image block to be decoded as the best matching block in a reference image with 1/8-pel resolution, including interpolating the sub-pel positions of blocks in the reference image using any interpolation method described above; and embedding into the bitstream the prediction error block and a motion vector with 1/8-pel resolution indicating the position of the prediction block within the reference frame.

According to yet another aspect of the present invention, an apparatus is provided for decoding an image block in a video sequence of images from a bitstream, the apparatus comprising: a decoder for decoding from the bitstream a prediction error block and a motion vector with 1/8-pel resolution; a motion compensation unit for determining a prediction block by predicting the image block to be decoded as a block in a reference image on the position specified by the extracted motion vector, including an apparatus for interpolating the sub-pel positions of blocks in the reference image as described above; and a reconstructing unit for reconstructing the image block by adding the prediction block and the prediction error block.

According to yet another aspect of the present invention, an apparatus is provided for encoding an image block in a video sequence of images to a bitstream comprising the steps of: a motion compensation unit for determining a prediction block by predicting the image block to be decoded as the best matching block in a reference image with 1/8-pel resolution, including an apparatus for interpolating the sub-pel positions of blocks in the reference image as described above; and an encoder for embedding into the bitstream the prediction error block and a motion vector with 1/8-pel resolution indicating the position of the prediction block within the reference frame.

In accordance with still another aspect of the present invention, a computer readable medium storing instructions that, when executed by the processor, perform any of the above described methods.

The above and other objects and features of the present invention will become more apparent from the following description and preferred embodiments given in conjunction with the accompanying drawings in which:

Figure 1 is a block diagram illustrating an example of a conventional H.264/MPEG-4 AVC video encoder;

Figure 2 is a block diagram illustrating an example of a conventional H.264/MPEG-4 AVC video decoder;

Figure 3 is a schematic drawing illustrating the pattern of full-pel positions in a block of 6x6 pixels as well as half-pel and quarter-pel positions;

Figure 4 is a schematic drawing of an example illustrating the frequency of using particular sub-pel positions for filtering of other sub-pel positions;

Figure 5 is a schematic drawing of an example illustrating a nearest neighbor interpolation of 1/8-pel samples in horizontal and vertical direction;

Figure 6 is a schematic drawing of an example illustrating horizontal and vertical interpolation of 1/8-pel samples in accordance with the present invention;

Figure 7 is a schematic drawing of an example illustrating a nearest neighbor interpolation of 1/8-pel samples in diagonal direction;

Figure 8 is a schematic drawing of an example illustrating diagonal interpolation of 1/8-pel samples according to the present invention;

Figure 9 is a schematic drawing of an example illustrating interpolation of 1/8-pel samples that do not share a row, a column or a diagonal with any full-pel or half-pel positions;

Figure 10 is a flow chart illustrating an example of an encoding and a decoding method for applying the present invention;

Figure 11 is a flow chart illustrating an example of interpolation performed at the encoder and at the decoder in accordance with the present invention;

Figure 12 is a block diagram illustrating a system for transmitting and receiving a signal encoded in accordance with the present invention;

Figure 13 is a schematic drawing illustrating an overall configuration of a content providing system for implementing content distribution services;

Figure 14 is a schematic drawing illustrating an overall configuration of a digital broadcasting system;

Figure 15 is a block diagram illustrating an example of a configuration of a television;

Figure 16 is a block diagram illustrating an example of a configuration of an information reproducing/recording unit that reads and writes information from or on a recording medium that is an optical disk;

Figure 17 is a schematic drawing showing an example of a configuration of a recording medium that is an optical disk;

Figure 18A is a schematic drawing illustrating an example of a cellular phone;

Figure 18B is a block diagram showing an example of a configuration of the cellular phone;

Figure 19 is a schematic drawing showing a structure of multiplexed data;

Figure 20 is a drawing schematically illustrating how each of the streams is multiplexed in multiplexed data;

Figure 21 is a schematic drawing illustrating how a video stream is stored in a stream of PES packets in more detail;

Figure 22 is a schematic drawing showing a structure of TS packets and source packets in the multiplexed data;

Figure 23 is a schematic drawing showing a data structure of a PMT;

Figure 24 is a schematic drawing showing an internal structure of multiplexed data information;

Figure 25 is a schematic drawing showing an internal structure of stream attribute information;

Figure 26 is a schematic drawing showing steps for identifying video data;

Figure 27 is a schematic block diagram illustrating an example of a configuration of an integrated circuit for implementing the video coding method and the video decoding method according to each of embodiments;

Figure 28 is a schematic drawing showing a configuration for switching between driving frequencies;

Figure 29 is a schematic drawing showing steps for identifying video data and switching between driving frequencies;

Figure 30 is a schematic drawing showing an example of a look-up table in which the standards of video data are associated with the driving frequencies;

Figure 31A is a schematic drawing showing an example of a configuration for sharing a module of a signal processing unit, and

Figure 31B is a schematic drawing showing another example of a configuration for sharing a module of a signal processing unit.

DETAILED DESCRIPTION

The problem underlying the present invention is based on the observation that 1/8-pel interpolation enables increasing the accuracy of the prediction, however, is connected with the increase of complexity caused by multiple usage of already interpolated samples. Furthermore, the multiple usage of already interpolated samples may lead to blurring the image. Also the non-uniform filtering of particular sub-pel positions may result in decreasing the quality of the interpolated image.

In order to overcome these problems, the present invention reduces the reuse of already interpolated subsamples for interpolating new subsamples and increases in such a way the uniformity of interpolation filtering. In particular, according to the present invention, only the full-pel positions and the half-pel positions are used to interpolate 1/8-pel positions. The quarter-pel positions are not further used.

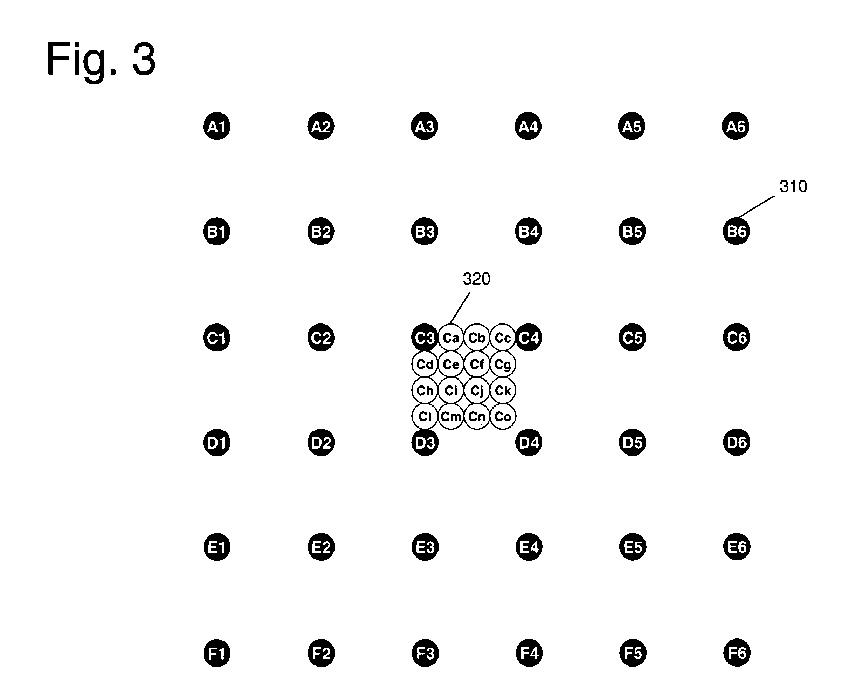

Figure 3 illustrates a block of 6 x 6 full-pel positions 310, the full-pel positions being denoted row-wise as A1 to A6, B1 to B6, C1 to C6, D1 to D6, E1 to E6, and F1 to F6. Between the full-pel positions C3, C4, D3, and D4 sub-pel positions are to be interpolated by using an interpolation filter such as 150, 250. In particular, half-pel positions Cb, Ch, and Cj and quarter pel positions Ca, Cc, Cd, Ce, Cf, Cg, Ci, Ck, Cl, Cm, Cn, and Co are to be interpolated.

The horizontal and vertical quarter-pel positions Ca, Cc, Cd, and Cl are quarter-pel positions that are located in a row and in a column between two full-pel positions, respectively, in particular in ¼ and ¾ positions between two full-pel positions. The horizontal and vertical quarter-pel positions Ca, Cc, Cd, and Cl can therefore be advantageously interpolated by filtering horizontally and/or vertically the full-pel positions in the corresponding row or column of full-pel positions. For instance, the quarter-pel position Ca can be obtained by horizontal filtering as:

$$Ca = [C1 \cdot h^{(Ca)}{}_1 + C2 \cdot h^{(Ca)}{}_2 + C3 \cdot h^{(Ca)}{}_3 + C4 \cdot h^{(Ca)}{}_4 + C5 \cdot h^{(Ca)}{}_5 + C6 \cdot h^{(Ca)}{}_6 + 2^7] >> 8,$$

wherein $h^{(Ca)}{}_1$ to $h^{(ca)}{}_6$ are here filter coefficients of a one-dimensional 6-tap horizontal filter. This results in number $N_{ca}$ of operations such as additions, multiplications, and shifts, which is equal for interpolating the positions Ca, Cc, Cd, and Cl, in particular:

$$N_{Ca} = N_{Cc} = N_{Cd} = N_{Cl} = 13.$$

In particular, the positions Ca and Cc are obtained by horizontal filtering of the row of full-pel positions C1 to C6 and the positions Cd and Cl are obtained by vertical filtering of the column of full-pel positions A3 to F3.

Similarly, the horizontal and vertical half-pel positions Cb and Ch are half-pel positions which are located in a row and a column same as full-pel positions, and in the middle (1/2 position) of two full-pel positions. The horizontal and vertical half-pel positions Cb and Ch are obtained by horizontal and vertical filtering of the full-pel positions in the row or column of full-pel samples, respectively. In particular, these half-pel positions are interpolated with symmetrical filter coefficients. For instance, the half-pel position Cb is interpolated as:

$$Cb = [(C1 + C6) \cdot h^{(Cb)}{}_1 + (C2 + C5) \cdot h^{(Cb)}{}_2 + (C3 + C4) \cdot h^{(Cb)}{}_3 + 2^7] >> 8,$$

wherein $h^{(Cb)}{}_1$ to $h^{(Cb)}{}_3$ are filter coefficients. This results in number $N_{Cb}$ of operations such as additions, multiplications, and shifts, which is equal for interpolating the positions Cb and Ch, and lower than the number of operations for interpolating the horizontal and vertical quarter-pel positions, in particular:

$$N_{Cb} = N_{Ch} = 10.$$

The position Cj is a diagonal half-pel position meaning that it is located on a main diagonal connecting full-pel positions, in the middle between two full-pel positions, in this case C3 and D4 (as well as C4 and D3). The position Cj may be obtained similarly to the horizontal and vertical half-pel positions Cb and Ch by horizontally and/or vertically filtering the positions within the same row and/or columns respectively. However, the positions in the same row and/or column as Cj are half-pel positions. Thus, the diagonal half-pel position may be obtained, for instance by vertical filtering the half-pel positions CbA, CbB, CbC=Cb, CbD, CbE, and CbF with a symmetric filter having filter coefficients $h^{(Cj)}{}_1$ to $h^{(Cj)}{}_3$

$$Cj = [(Cb_A + Cb_F) \cdot h^{(Cj)}{}_1 + (Cb_B + Cb_E) \cdot h^{(Cj)}{}_2 + (Cb_C + Cb_D) \cdot h^{(Cj)}{}_3 + 2^7] >> 8,$$

where, the position CbA is a half-pel position within the row A in the middle between full-pel positions A3 and A4. Similarly, the position CbB is a half-pel position in the middle between full-pel positions B3 and B4, the position CbD is a half-pel position in the middle between full-pel positions D3 and D4, etc. In other words, the position CbX is for X=A to F a sub-pel position between full-pels X3 and X4, the sub-pel position corresponding to position of Cb within full-pel positions C3 and C4 as shown in Figure 3. In particular, the diagonal half-pel position thus requires calculating first each half-pel position, which corresponds to operations for calculating the half-pel positions and then filtering the calculated half-pel positions. This yields the number of necessary calculations $N_{Cj} = 70$.

The quarter-pel positions located in a row or column of half-pel positions, between two half-pel positions such as Ce, Cg, Cm, and Co are calculated by filtering vertically and/or horizontally the half-pel positions on the corresponding row and/or column. For instance, the position Ce may be interpolated as:

$$Ce = [(Ca_A \cdot h^{(Ce)}{}_1 + Ca_B \cdot h^{(Ce)}{}_2 + Ca_C \cdot h^{(Ce)}{}_3 + Ca_D \cdot h^{(Ce)}{}_4 + Ca_E \cdot h^{(Ce)}{}_5 + Ca_F \cdot h^{(Ce)}{}_6 + 2^7] >> 8$$

wherein the position $Ca_x$ for X=A to F denotes sub-pel position between full-pel positions X3 and X4 at the same position as Ca has between full-pel positions C3 and C4. The number of operations necessary for interpolating the quarter-pel positions Ce, Cg, Cm, and Co is then:

$$N_{Ce} = N_{Cg} = N_{Cm} = N_{Co} = 91.$$

The remaining quarter-pel positions Ci, Ck, Cf, and Cn are then interpolated as

$$Ci = [(Ca_A + Ca_F) \cdot h^{(Ci)}{}_1 + (Ca_B + Ca_E) \cdot h^{(Ci)}{}_2 + (Ca_C + Ca_D) \cdot h^{(Ci)}{}_3 + 2^7] >> 8$$
$$\Rightarrow N_{Ci} = N_{Ck} = 88$$

and

$$Cf = [Cb_A \cdot h^{(Cf)}{}_1 + Cb_B \cdot h^{(Cf)}{}_2 + Cb_C \cdot h^{(Cf)}{}_3 + Cb_D \cdot h^{(Cf)}{}_4 + Cb_E \cdot h^{(Cf)}{}_5 + Cb_F \cdot h^{(Cf)}{}_6 + 2^7] >> 8$$
$$\Rightarrow N_{Cf} = N_{Cn} = 73$$

In general, the filtering coefficients *h* may differ for each sub-pel position and may be obtained as adaptive filter, for instance as a Wiener filter. Such coefficients are preferably determined at the encoder and provided to the decoder. In order to reduce the number of parameters to be signalized, filter symmetries may be defined, and/or some constraints on the filter coefficient values. However, the filter coefficients may also be fixed, or selected from a predefined set of filters.

Moreover, the above description of half-pel position interpolation and quarter-pel position interpolation is also only an example. These sub-positions may also be obtained in a different manner. The filter coefficients may also be fixed rather than adaptively set, or may be selectable from a predefined set of filters.

As can be seen from the above, different interpolated sub-pel positions are further used for interpolating other sub-pel positions. In particular, some sub-pel positions are used for interpolating a single other sub-pel position, and other sub-pel positions are used to interpolate more than one different sub-pel positions. This leads to a non-uniformity of filtering. The sub-pel positions that are used to interpolate higher amount of other sub-pel positions may also cause "overfiltering", meaning that the same information is included (spread) in a lot of other sub-pel positions. Such overfiltering may lead to blur and thus to overall worsening the quality of the filtered image. Moreover, multiple filtering using the same sub-pel positions increases the complexity of such an interpolation filtering.

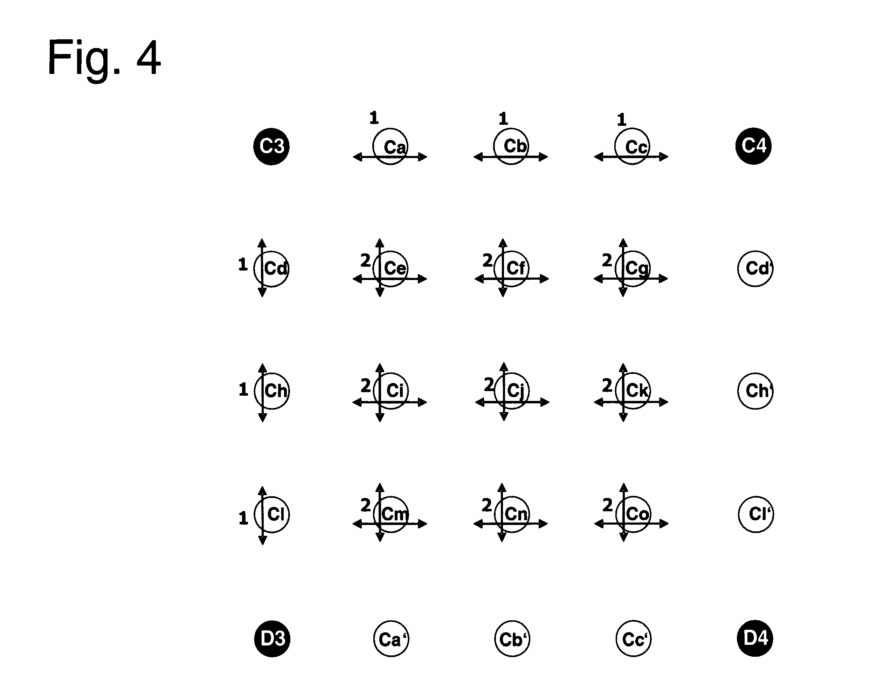

Figure 4 illustrates how often filtering is applied to interpolate a particular sub-pel position — in this case to interpolate the half-pel and quarter-pel positions. In particular, Figure 4 shows a part of a part of Figure 3, namely, the half-pel and quarter-pel positions between the full-pel positions C3, C4, D3, and D4. The vertical lines indicate that the sample has been filtered by a vertical filter and horizontal lines indicate that the sample has been filtered by a horizontal filter. The number of lines illustrates the number of filterings to obtain quarter-pel positions.

According to the present invention, the 1/8-pel positions are interpolated only from half-pel positions or full-pel positions, but not from the quarter-pel positions.

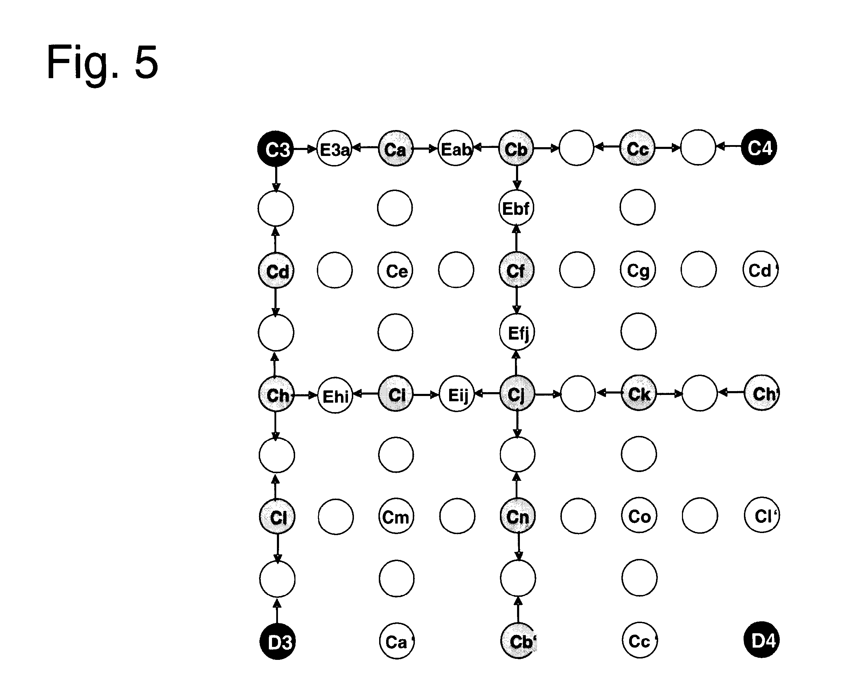

Figure 5 illustrates an example of a nearest neighbor 1/8-pel interpolation which uses for interpolating the 1/8-pel positions its nearest neighboring sub-pel positions, which means, in general, the quarter-pel positions, the half-pel positions and the full-pel positions, depending on the location of the 1/8-pel position to be interpolated.

For instance, to calculate 1/8-pel position sample *E3a,* on the position of 1/8 of the interval between full-pel positions C3 and C4, the full-pel position C3 and the quarter-pel position Ca are filtered, as follows

$$E3a = [C3 + Ca + 1] >> 1,$$

which requires $N_{E3a} = N_{Ca} + 3 = 16$ operations. Similarly, the 1/8-pel position Eab may be interpolated by filtering of a quarter-pel position Ca and a half-pel position Cb as:

$$Eab = [Ca + Cb + 1] >> 1,$$

which requires $N_{Eab} = N_{Ca} + N_{Cb} + 3 = 26$ operations. The interpolation of the remaining 1/8-pel positions in Figure 5 is performed as follows:

$$Ebf = [Cb + Cf + 1] >> 1$$
$$\Rightarrow N_{Ebf} = N_{Cb} + N_{Cf} + 3 = 86$$

$$Efj = [Cf + Cj + 1] >> 1$$
$$\Rightarrow N_{Efj} = N_{Cf} + N_{Cj} + 3 = 146$$

$$Ehi = [Ch + Ci + 1] >> 1$$
$$\Rightarrow N_{Ehi} = N_{Ch} + N_{Ci} + 3 = 101$$

$$Eij = [Ci + Cj + 1] >> 1$$
$$\Rightarrow N_{Eij} = N_{Ci} + N_{Cj} + 3 = 158$$

As can be seen, the number of operations per interpolated sub-pel position becomes rather high as soon as quarter-pel positions are filtered.

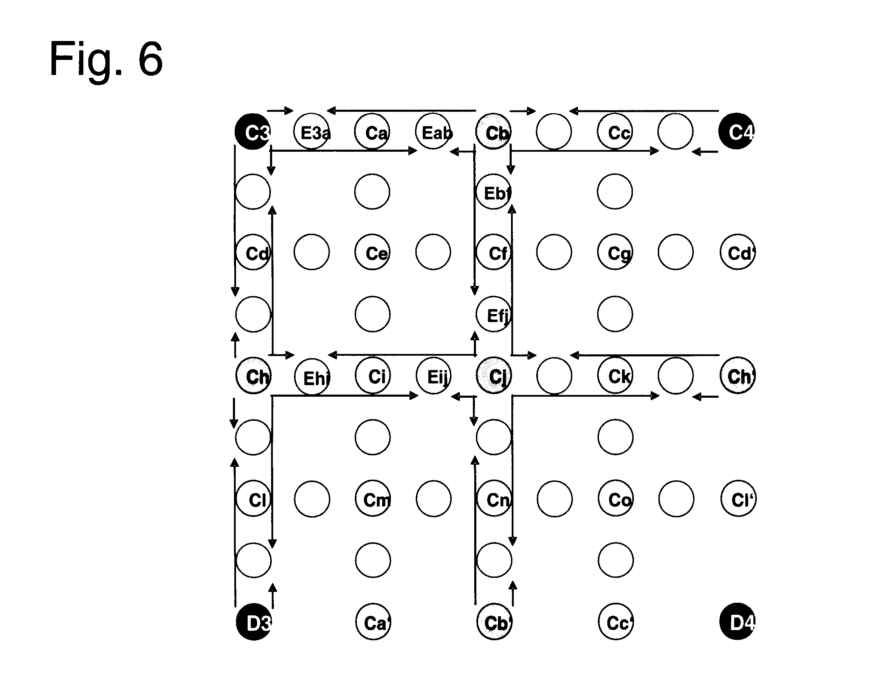

Therefore, according to the present invention, the 1/8-pel positions E3a, Eab, Ebf, Efj, Ehi, and Eij are interpolated by filtering vertically or horizontally only full-pel positions or half-pel positions, but no quarter-pel positions. This is shown in Figure 6. In particular, sub-pel positions that are located in rows or columns with full-pel and/or half-pel positions are interpolated by vertical and horizontal filtering, respectively. The filter weights are set proportionally to the location of the 1/8-pel position with respect to the full-pel or half-pel positions used for its interpolation. For instance the position E3a is interpolated as:

$$E3a = [3 \cdot C3 + Cb + 2] >> 2 ,$$

which results in number of operations $\Rightarrow N_{E3a} = N_{Cb} + 4 = 14$. This is by 2 operations less than for the nearest neighbor interpolation described above. Similarly, the 1/8-pel positions Eab, Ebf, Efj, Ehi, and Eij are interpolated in accordance with the present invention as:

$$Eab = [3 \cdot Cb + C3 + 2] >> 2$$
$$\Rightarrow N_{Eab} = N_{Cb} + 4 = 14$$

$$Ebf = [3 \cdot Cb + Cj + 2] >> 2$$
$$\Rightarrow N_{Ebf} = N_{Cb} + N_{Cj} + 4 = 84$$

$$Efj = [3 \cdot Cj + Cb + 2] >> 2$$
$$\Rightarrow N_{Efj} = N_{Cj} + N_{Cb} + 4 = 84$$

$$Ehi = [3 \cdot Ch + Cj + 2] >> 2$$
$$\Rightarrow N_{Ehi} = N_{Ch} + N_{Cj} + 4 = 84$$

$$Eij = [3 \cdot Cj + Ch + 2] >> 2$$
$$\Rightarrow N_{Eij} = N_{Cj} + N_{Ch} + 4 = 84$$

As can be seen from the comparison of schemes in Figure 5 and 6, the interpolation using only half-pel positions and sub-pel positions to interpolate the 1/8 positions results in less operations to be performed for interpolating a single pixel. Moreover, it is avoided to filter quarter-pel positions for obtaining the 1/8-pel positions. Thus, both quarter-pel positions and the 1/8-pel positions are interpolated in a similar way: by filtering the half-pel positions and/or full-pel positions only. This increases the uniformity of filtering of the sub-pel positions.

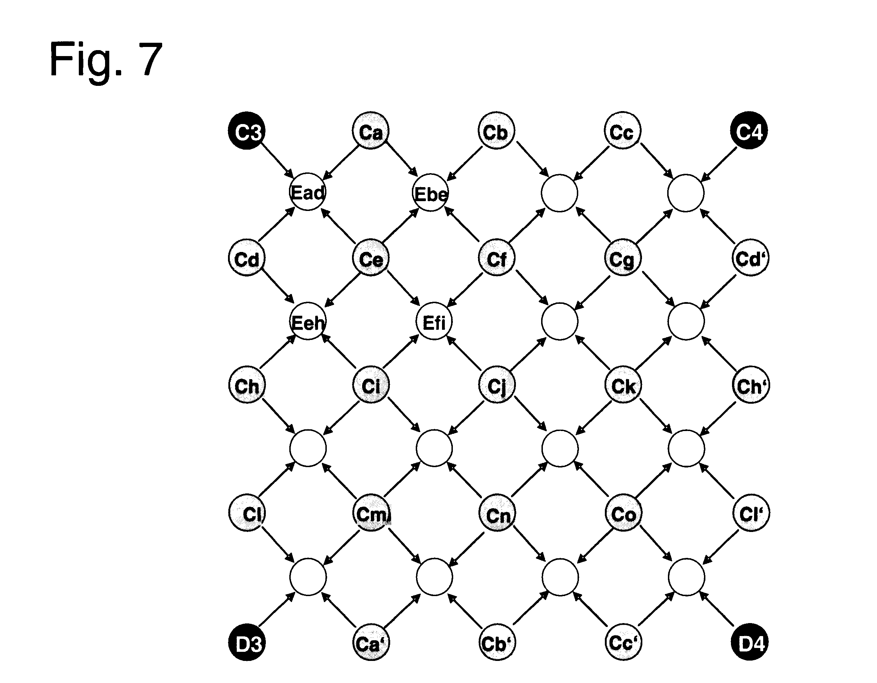

Figure 7 illustrates application of a nearest neighbor interpolation of 1/8-pel positions Ead, Ebe, Eeh, and Efi which are located on main diagonals between two sub-pel positions such as quarter-pel positions, half-pel positions and/or full-pel positions. The nearest neighbor interpolation for these positions can be performed as:

$$Ead = [C3 + Ca + Cd + Ce + 2] >> 2$$
$$\Rightarrow N_{Ead} = N_{Ca} + N_{Cd} + N_{Ce} + 5 = 122$$

$$Ebe = [Ca + Cb + Ce + Cf + 2] >> 2$$
$$\Rightarrow N_{Ebe} = N_{Ca} + N_{Cb} + N_{Ce} + N_{Cf} + 5 = 192$$

$$Eeh = [Cd + Ce + Ch + Ci + 2] >> 2$$
$$\Rightarrow N_{Eeh} = N_{Cd} + N_{Ce} + N_{Ch} + N_{Ci} + 5 = 207$$

$$Efi = [Ce + Cf + Ci + Cj + 2] >> 2$$
$$\Rightarrow N_{Efi} = N_{Ce} + N_{Cf} + N_{Ci} + N_{Cj} + 5 = 327$$

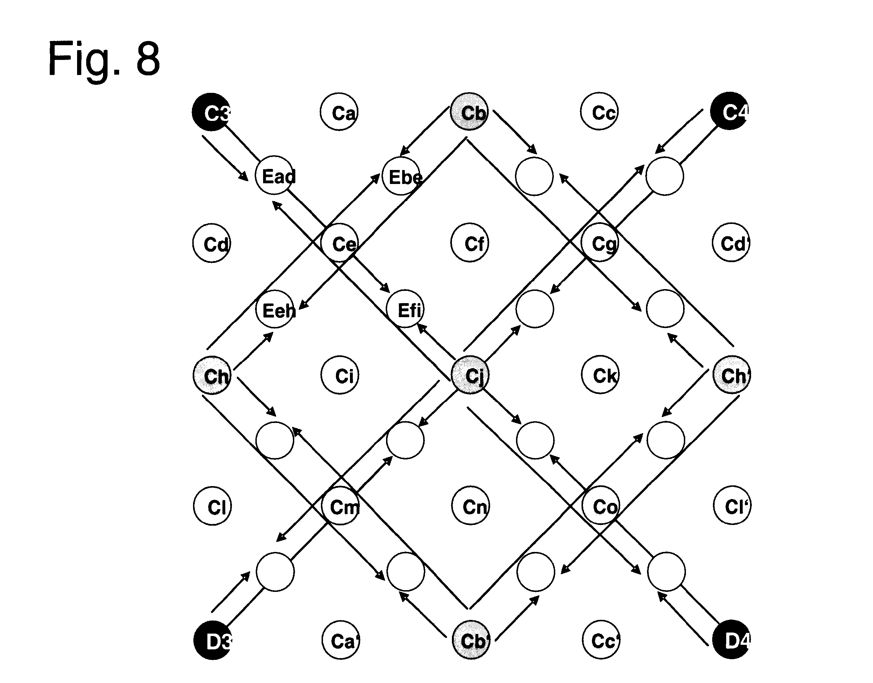

Figure 8 illustrates interpolation of 1/8-pel positions Ead, Ebe, Eeh, and Efi in accordance with the present invention. These positions are located on diagonals connecting full-pel positions and/or half-pel positions. According to the present invention, these positions are interpolated using the full-pel and half-pel positions on the diagonals. In particular, the 1/8-pel positions Ead, Ebe, Eeh, and Efi are interpolated as follows:

$$Ead = [3 \cdot C3 + Cj + 2] >> 2$$
$$\Rightarrow N_{Ead} = N_{Cj} + 4 = 74$$

$$Ebe = [3 \cdot Cb + Ch + 2] >> 2$$
$$\Rightarrow N_{Ebe} = N_{Cb} + N_{Ch} + 4 = 24$$

$$Eeh = [3 \cdot Ch + Cb + 2] >> 2$$
$$\Rightarrow N_{Eeh} = N_{Ch} + N_{Cb} + 4 = 24$$

$$Efi = [3 \cdot Cj + C3 + 2] >> 2$$
$$\Rightarrow N_{Efi} = N_{Cj} + 4 = 74$$

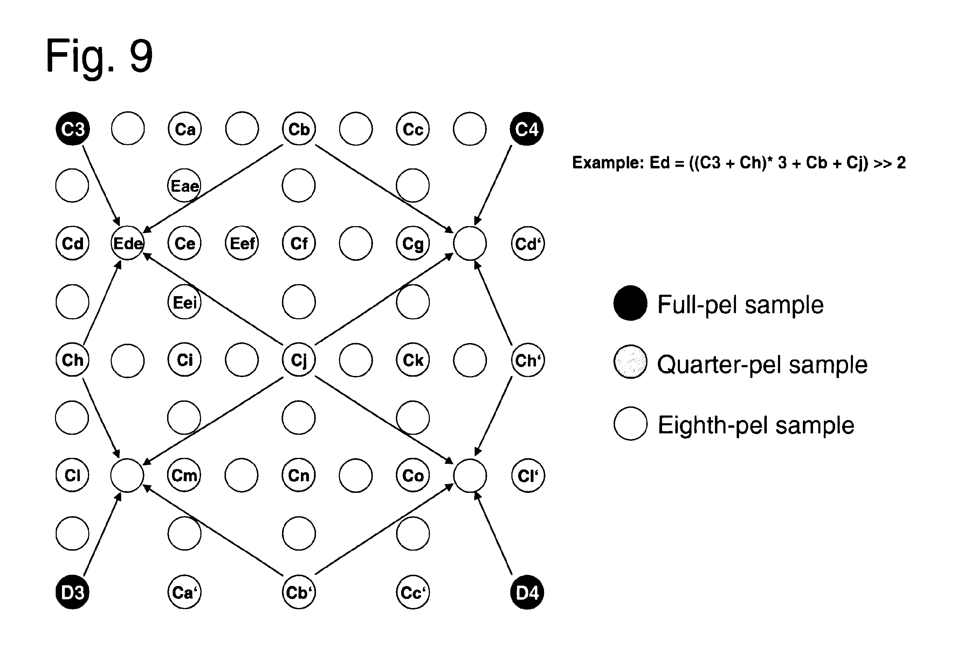

Moreover, Figure 9 illustrates interpolation of the remaining 1/8-pel positions Eae, Ede, Eef, and Eei in accordance with the present invention.

$$Eae = [3 \cdot (C3 + Cb) + Ch + Cj + 8] >> 4$$
$$\Rightarrow N_{Eae} = N_{Ch} + N_{Cb} + N_{Cj} + 6 = 96$$
$$\Rightarrow N_{Ede} = 96$$

$$Ede = [3 \cdot (C3 + Ch) + Cb + Cj + 8] >> 4$$
$$\Rightarrow N_{Eae} = N_{Ch} + N_{Cb} + N_{Cj} + 6 = 96$$
$$\Rightarrow N_{Ede} = 96$$

$$Eef = [3 \cdot (Cb + Cj) + C3 + Ch + 8] >> 4$$
$$\Rightarrow N_{Eef} = N_{Cb} + N_{Cj} + N_{Ch} + 6 = 96$$

$$Eei = [3 \cdot (Ch + Cj) + C3 + Cb + 8] >> 4$$
$$\Rightarrow N_{Eei} = N_{Ch} + N_{Cj} + N_{Cb} + 6 = 96$$

Similarly, the positions Efg, Eno, Elm, Ecg, Eko, Elm, Egd', Eol', Emn, Egk, Eoc', and Ema' are interpolated as indicated by arrows in Figure 9.

Summarizing, the average number of calculations across all 1/8-pel position samples is:

$$\overline{N}_E = \begin{pmatrix} 4 \cdot \left(N_{E3a} + N_{Eab} + N_{Ead} + N_{Ebe} + N_{Eeh} + N_{Efi} + N_{Eae} + N_{Ede} + N_{Eef} + N_{Eei}\right) \\ + 2 \cdot \left(N_{Ebf} + N_{Efj} + N_{Ehi} + N_{Eij}\right) \end{pmatrix} / 48$$

This is for nearest neighborhood 1/8-pel position interpolation $\overline{N}_E \approx 142$. For the example interpolation scheme of the present invention, it is only $\overline{N}_E \approx 65$, which is less than half of the operations necessary for nearest neighborhood 1/8-pel interpolation.

When comparing the worst case, for nearest neighborhood 1/8-pel position interpolation it is interpolation of the position Eei, resulting in number of operations $N_{E,max} = N_{Eei} = 327$. For the interpolation scheme described with reference to Figures 6, 8, and 9, the worst case is $N_{E,max} = N_{Eae} = N_{Ede} = N_{Eef} = N_{Eei} = 96$, which is less than 1/3 of the operations needed for worst case of nearest neighborhood 1/8-pel interpolation.

It should be noted that the above described interpolation filtering may be implemented in various ways and that the number of operations for calculating the 1/8-pel positions shown above is only for illustrational purposes. The above example assumes that each 1/8-pel position is interpolated separately and possibly in parallel and that the results of calculations of other sub-pel positions are not reused. However, such an implementation is only an example. It shows how many steps are necessary to obtain each single sub-pel. Furthermore, it illustrates based on different number of steps necessary for interpolating different sub-pel positions, that the filtering of different sub-pel positions between given full-pel positions is highly non-uniform in case of nearest neighbor filtering applied for obtaining 1/8-pel positions and that the interpolation according to the embodiment of the present invention enhances the uniformity of filtering considerably.

In general, the interpolation filtering may be implemented sequentially, for instance, by interpolating first the values of half-pel positions, based on the already calculated half-pel positions to calculate the quarter-pel positions, and afterwards calculating the 1/8-pel positions based on the already implemented half-pel positions, full-pel positions and quarter-pel positions. Also in this case, apart of the higher uniformity, the present invention provides further advantage, since it does not need the quarter-pel positions for interpolating the 1/8-pel positions and may thus be better parallelized, since the quarter-pel positions and 1/8-pel positions are interpolated similarly, using only the half-pel positions and full-pel positions.

Another possible implementation includes as a first step performing the interpolation of half-pel positions and quarter-pel positions and then as a second step, according to the already interpolated half-pel positions, the 1/8-pel interpolation. Moreover, the sub-pel positions may be interpolated separately from each other and independently from the already calculated samples, however, the number of operations for interpolation may differ from the numbers presented above since the terms in the formulas may be simplified in order to directly obtain filter coefficients for filtering the full-pel positions, resulting in different number of operations.

The apparatus for interpolating the 1/8-pel positions of the present invention may be advantageously embodied within the interpolation filter unit 150 and 250 of Figures 1 and 2, respectively. Similarly, the encoding apparatus and the decoding apparatus of the present invention may be similar to the encoder 100 and decoder 200 shown in Figures 1 and 2.

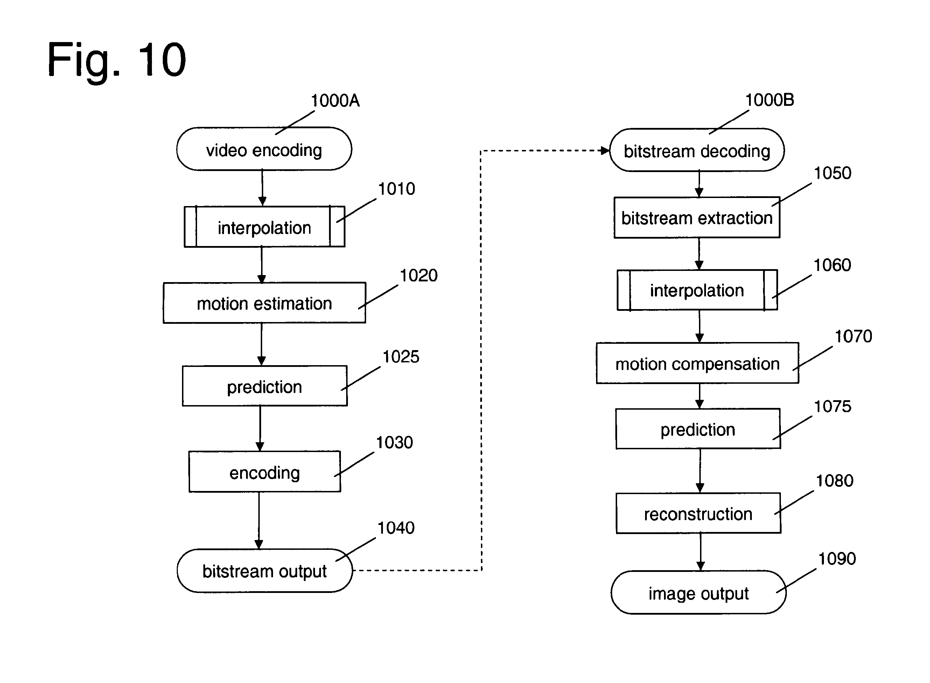

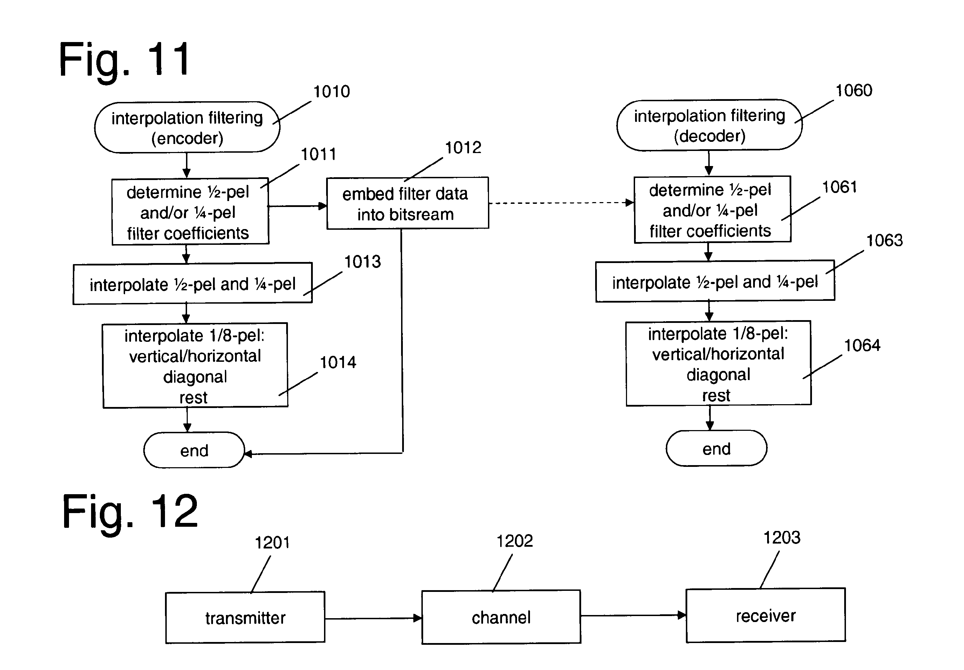

Figure 10 illustrates a flow diagram of an example method for encoding 1000A and decoding 1000B according to the present invention. In particular, the encoding method 1000A includes a step 1010 of interpolation according to the present invention, which is illustrated in more detail in Figure 11. The interpolation 1010 starts with calculating 1011 the filter coefficients adaptively according to Wiener filter. However, this step is not present if the coefficients are fixed, or is replaced with a step of selecting a filter from a set of predefined filter, etc. The filter coefficients or other data necessary for calculating the filter coefficients may be embedded 1012 within the bitstream and provided in this way to a decoder (illustrated by a dashed line). Then, the half-pel positions and quarter-pel positions are interpolated 1013. Finally, the 1/8-pel positions are interpolated using only the full-pel positions and/or the half-pel positions without using the quarter-pel positions. The interpolation 1014 of 1/8-pel positions is performed by bilinear filtering, preferably in three steps: (i) vertical and horizontal interpolation of 1/8-pel positions sharing a row or a column with full-pel positions or half-pel positions, (ii) diagonal interpolation of 1/8-pel positions sharing a diagonal with full-pel positions or half-pel positions, and (iii) interpolation of the | remaining 1/8-pel positions. After the interpolation terminates, the encoding method continues with motion estimation 1020 and prediction 1025. In motion estimation, the best matching block is found for the block to be decoded, the best match being searched with the 1/8-pel resolution in the reference image (or its part) interpolated using interpolation filter according to the present invention. The result of prediction is the prediction signal being the best matching block and the motion vector identifying its location within the reference frame. After the prediction, the prediction error is encoded 1030 together with the motion vector and embedded within the bitstream, which is then output 1040.

The decoding method 1000B receives a bitstream such as the bitstream encoded by the encoding method 1000A, which is illustrated by a dashed line. The bitstream is parsed 1050 and motion vectors as well as prediction error signal is extracted therefrom. Then, the interpolation is performed 1060 in accordance with the present invention, as shown in detail in Figure 11. In particular, the half-pel and the quarter-pel positions filter is set-up 1061. This is performed using the filter data extracted from the bitstream, which are either directly the filter coefficients or an information enabling calculating them. The interpolation filter is then applied 1063 to obtain half-pel positions and quarter-pel positions. Finally, the 1/8-pel positions are interpolated 1064 by bilinear filtering as described above for the encoding method 1000A. The decoding method performed motion compensation 1070 with 1/8-pel resolution using the reference image and the block for block matching interpolated by the interpolation filter. The prediction block is then found 1080 and added 1090 to the prediction error signal extracted from the bitstream to reconstruct the image. The reconstructed image is output. It should be noted that the flow diagrams in Figures 10 and 11 are schematic and do not illustrate in detail the encoding and decoding loop as shown in Figure 1 and 2. In general, the encoding and the decoding are performed both block-wise.

Figure 12 illustrates a generalized example of system for transferring encoded video data from an encoder side to a decoder side in accordance with the present invention. An input video signal is encoded by an encoder 1201 and provided to a channel 1202. The encoder 1201 is an encoder in accordance with any of the embodiments of the present invention as described above. The channel 1202 is either storage or any transmission channel. The storage may be, for instance, any volatile or non-volatile memory, any magnetic or optical medium, a mass-storage, etc. The transmission channel may be formed by physical resources of any transmission system, wireless or wired, fixed or mobile, such as xDSL, ISDN, WLAN, GPRS, UMTS, Internet, or any standardized or proprietary system. Apart from the encoder, the encoder side may also include preprocessing of the input video signal such as format conversion and/or transmitter for transmitting the encoded video signal over the channel 1202 or an application for transferring the encoded video signal into the storage. The encoded video signal is then obtained from the channel 1202 by a decoder 1203. The decoder 1203 is a decoder in accordance with any embodiment of the present invention as described above. The decoder decodes the encoded video signal. Apart from the decoder, the decoder side may further include a receiver for receiving the encoded video signal from a transmission channel, or an application for extracting the encoded video data from the storage, and/or post-processing means for post processing of the decoded video signal, such as format conversion.

The processing described in each of embodiments can be simply implemented in an independent computer system, by recording, in a recording medium, a program for implementing the configurations of the video coding method and the video decoding method described in each of embodiments. The recording media may be any recording media as long as the program can be recorded, such as a magnetic disk, an optical disk, a magnetic optical disk, an IC card, and a semiconductor memory.

Hereinafter, the applications to the video coding method and the video decoding method described in each of embodiments and systems using thereof will be described.

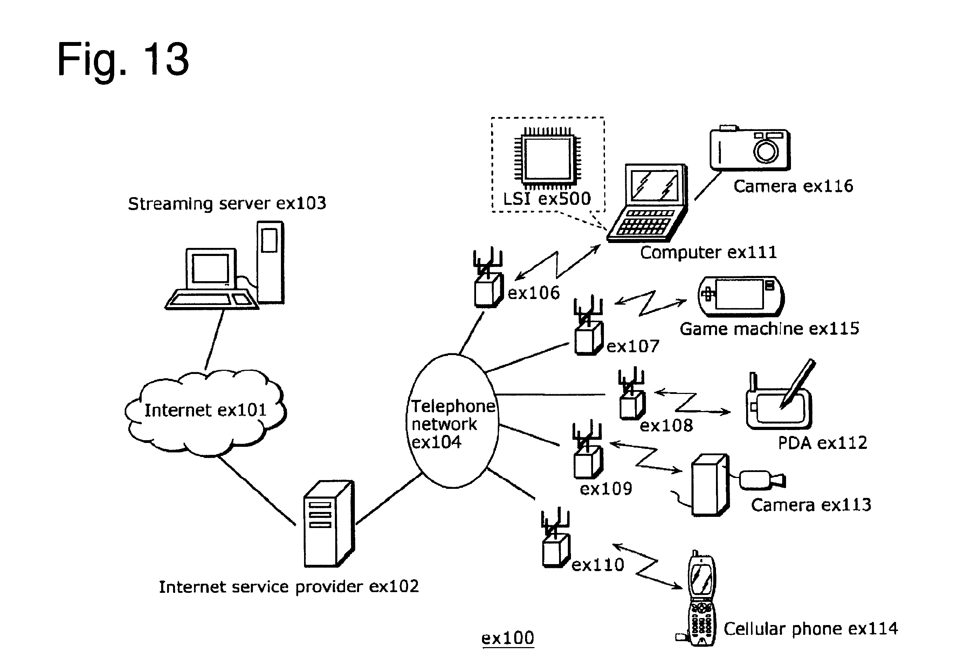

Figure 13 illustrates an overall configuration of a content providing system ex100 for implementing content distribution services. The area for providing communication services is divided into cells of desired size, and base stations ex106, ex107, ex108, ex109, and ex110 which are fixed wireless stations are placed in each of the cells.

The content providing system ex100 is connected to devices, such as a computer ex111, a personal digital assistant (PDA) ex112, a camera ex113, a cellular phone ex114 and a game machine ex115, via the Internet ex101, an Internet service provider ex102, a telephone network ex104, as well as the base stations ex106 to ex110, respectively.

However, the configuration of the content providing system ex100 is not limited to the configuration shown in Figure 13, and a combination in which any of the elements are connected is acceptable. In addition, each device may be directly connected to the telephone network ex104, rather than via the base stations ex106 to ex110 which are the fixed wireless stations. Furthermore, the devices may be interconnected to each other via a short distance wireless communication and others.

The camera ex113, such as a digital video camera, is capable of capturing video. A camera ex116, such as a digital video camera, is capable of capturing both still images and video. Furthermore, the cellular phone ex114 may be the one that meets any of the standards such as Global System for Mobile Communications (GSM), Code Division Multiple Access (CDMA), Wideband-Code Division Multiple Access (W-CDMA), Long Term Evolution (LTE), and High Speed Packet Access (HSPA). Alternatively, the cellular phone ex114 may be a Personal Handyphone System (PHS).

In the content providing system ex100, a streaming server ex103 is connected to the camera ex113 and others via the telephone network ex104 and the base station ex109, which enables distribution of images of a live show and others. In such a distribution, a content (for example, video of a music live show) captured by the user using the camera ex113 is coded as described above in each of embodiments, and the coded content is transmitted to the streaming server ex103. On the other hand, the streaming server ex103 carries out stream distribution of the transmitted content data to the clients upon their requests. The clients include the computer ex111, the PDA ex112, the camera ex113, the cellular phone ex114, and the game machine ex115 that are capable of decoding the above-mentioned coded data. Each of the devices that have received the distributed data decodes and reproduces the coded data.

The captured data may be coded by the camera ex113 or the streaming server ex103 that transmits the data, or the coding processes may be shared between the camera ex113 and the streaming server ex103. Similarly, the distributed data may be decoded by the clients or the streaming server ex103, or the decoding processes may be shared between the clients and the streaming server ex103. Furthermore, the data of the still images and video captured by not only the camera ex113 but also the camera ex116 may be transmitted to the streaming server ex103 through the computer ex111. The coding processes may be performed by the camera ex116, the computer ex111, or the streaming server ex103, or shared among them.

Furthermore, the coding and decoding processes may be performed by an LSI ex500 generally included in each of the computer ex111 and the devices. The LSI ex500 may be configured of a single chip or a plurality of chips. Software for coding and decoding video may be integrated into some type of a recording medium (such as a CD-ROM, a flexible disk, and a hard disk) that is readable by the computer ex111 and others, and the coding and decoding processes may be performed using the software. Furthermore, when the cellular phone ex114 is equipped with a camera, the image data obtained by the camera may be transmitted. The video data is data coded by the LSI ex500 included in the cellular phone ex114.

Furthermore, the streaming server ex103 may be composed of servers and computers, and may decentralize data and process the decentralized data, record, or distribute data.

As described above, the clients may receive and reproduce the coded data in the content providing system ex100. In other words, the clients can receive and decode information transmitted by the user, and reproduce the decoded data in real time in the content providing system ex100, so that the user who does not have any particular right and equipment can implement personal broadcasting.

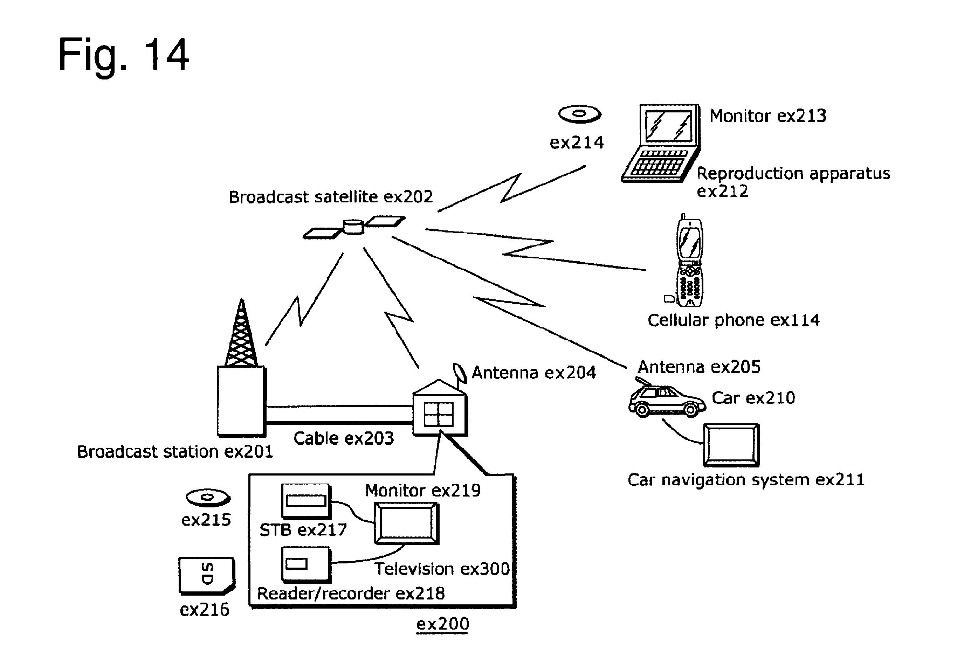

Aside from the example of the content providing system ex100, at least one of the video coding apparatus and the video decoding apparatus described in each of embodiments may be implemented in a digital broadcasting system ex200 illustrated in Figure 14. More specifically, a broadcast station ex201 communicates or transmits, via radio waves to a broadcast satellite ex202, multiplexed data obtained by multiplexing audio data and others onto video data. The video data is data coded by the video coding method described in each of embodiments. Upon receipt of the multiplexed data, the broadcast satellite ex202 transmits radio waves for broadcasting. Then, a home-use antenna ex204 with a satellite broadcast reception function receives the radio waves.

Next, a device such as a television (receiver) ex300 and a set top box (STB) ex217 decodes the received multiplexed data, and reproduces the decoded data.

Furthermore, a reader/recorder ex218 (i) reads and decodes the multiplexed data recorded on a recording media ex215, such as a DVD and a BD, or (i) codes video signals in the recording medium ex215, and in some cases, writes data obtained by multiplexing an audio signal on the coded data. The reader/recorder ex218 can include the video decoding apparatus or the video coding apparatus as shown in each of embodiments. In this case, the reproduced video signals are displayed on the monitor ex219, and can be reproduced by another device or system using the recording medium ex215 on which the multiplexed data is recorded. It is also possible to implement the video decoding apparatus in the set top box ex217 connected to the cable ex203 for a cable television or to the antenna ex204 for satellite and/or terrestrial broadcasting, so as to display the video signals on the monitor ex219 of the television ex300. The video decoding apparatus may be implemented not in the set top box but in the television ex300.

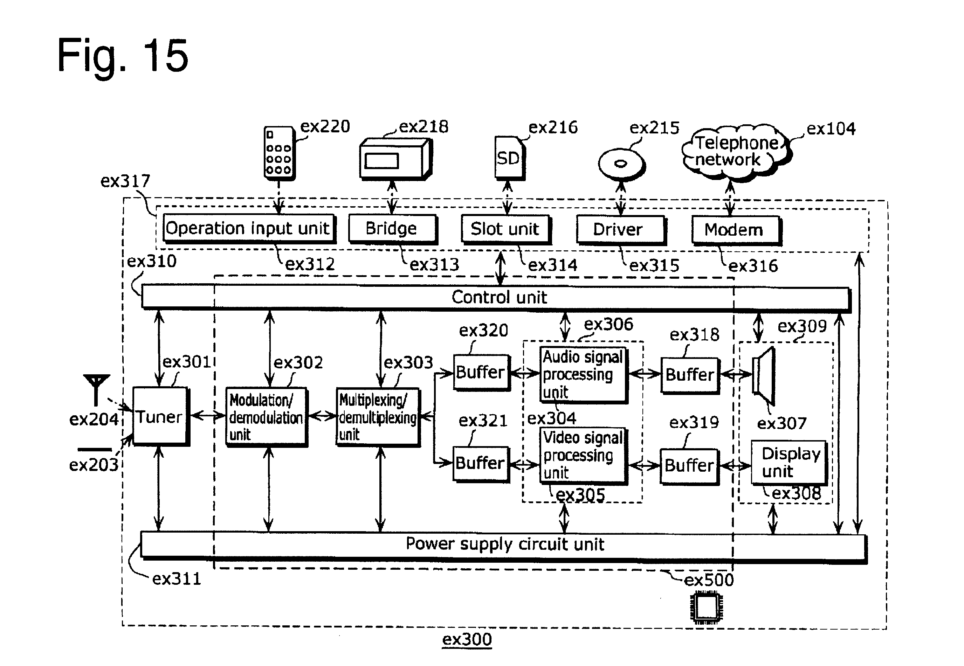

Figure 15 illustrates the television (receiver) ex300 that uses the video coding method and the video decoding method described in each of embodiments. The television ex300 includes: a tuner ex301 that obtains or provides multiplexed data obtained by multiplexing audio data onto video data, through the antenna ex204 or the cable ex203, etc. that receives a broadcast; a modulation/demodulation unit ex302 that demodulates the received multiplexed data or modulates data into multiplexed data to be supplied outside; and a multiplexing/demultiplexing unit ex303 that demultiplexes the modulated multiplexed data into video data and audio data, or multiplexes video data and audio data coded by a signal processing unit ex306 into data.

The television ex300 further includes: a signal processing unit ex306 including an audio signal processing unit ex304 and a video signal processing unit ex305 that decode audio data and video data and code audio data and video data, respectively; and an output unit ex309 including a speaker ex307 that provides the decoded audio signal, and a display unit ex308 that displays the decoded video signal, such as a display. Furthermore, the television ex300 includes an interface unit ex317 including an operation input unit ex312 that receives an input of a user operation. Furthermore, the television ex300 includes a control unit ex310 that controls overall each constituent element of the television ex300, and a power supply circuit unit ex311 that supplies power to each of the elements. Other than the operation input unit ex312, the interface unit ex317 may include: a bridge ex313 that is connected to an external device, such as the reader/recorder ex218; a slot unit ex314 for enabling attachment of the recording medium ex216, such as an SD card; a driver ex315 to be connected to an external recording medium, such as a hard disk; and a modem ex316 to be connected to a telephone network. Here, the recording medium ex216 can electrically record information using a non-volatile/volatile semiconductor memory element for storage. The constituent elements of the television ex300 are connected to each other through a synchronous bus.

First, the configuration in which the television ex300 decodes multiplexed data obtained from outside through the antenna ex204 and others and reproduces the decoded data will be described. In the television ex300, upon a user operation through a remote controller ex220 and others, the multiplexing/demultiplexing unit ex303 demultiplexes the multiplexed data demodulated by the modulation/demodulation unit ex302, under control of the control unit ex310 including a CPU. Furthermore, the audio signal processing unit ex304 decodes the demultiplexed audio data, and the video signal processing unit ex305 decodes the demultiplexed video data, using the decoding method described in each of embodiments, in the television ex300. The output unit ex309 provides the decoded video signal and audio signal outside, respectively. When the output unit ex309 provides the video signal and the audio signal, the signals may be temporarily stored in buffers ex318 and ex319, and others so that the signals are reproduced in synchronization with each other. Furthermore, the television ex300 may read multiplexed data not through a broadcast and others but from the recording media ex215 and ex216, such as a magnetic disk, an optical disk, and a SD card. Next, a configuration in which the television ex300 codes an audio signal and a video signal, and transmits the data outside or writes the data on a recording medium will be described. In the television ex300, upon a user operation through the remote controller ex220 and others, the audio signal processing unit ex304 codes an audio signal, and the video signal processing unit ex305 codes a video signal, under control of the control unit ex310 using the coding method described in each of embodiments. The multiplexing/demultiplexing unit ex303 multiplexes the coded video signal and audio signal, and provides the resulting signal outside. When the multiplexing/demultiplexing unit ex303 multiplexes the video signal and the audio signal, the signals may be temporarily stored in the buffers ex320 and ex321, and others so that the signals are reproduced in synchronization with each other. Here, the buffers ex318, ex319, ex320, and ex321 may be plural as illustrated, or at least one buffer may be shared in the television ex300. Furthermore, data may be stored in a buffer so that the system overflow and underflow may be avoided between the modulation/demodulation unit ex302 and the multiplexing/demultiplexing unit ex303, for example.

Furthermore, the television ex300 may include a configuration for receiving an AV input from a microphone or a camera other than the configuration for obtaining audio and video data from a broadcast or a recording medium, and may code the obtained data. Although the television ex300 can code, multiplex, and provide outside data in the description, it may be capable of only receiving, decoding, and providing outside data but not the coding, multiplexing, and providing outside data.

Furthermore, when the reader/recorder ex218 reads or writes multiplexed data from or on a recording medium, one of the television ex300 and the reader/recorder ex218 may decode or code the multiplexed data, and the television ex300 and the reader/recorder ex218 may share the decoding or coding.

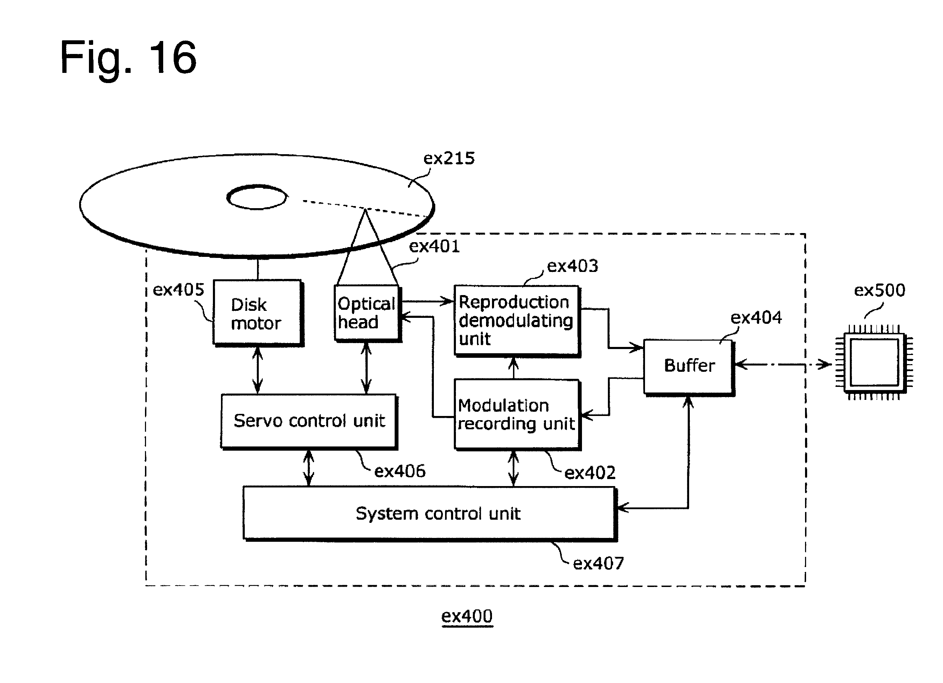

As an example, Figure 16 illustrates a configuration of an information reproducing/recording unit ex400 when data is read or written from or on an optical disk. The information reproducing/recording unit ex400 includes constituent elements ex401, ex402, ex403, ex404, ex405, ex406, and ex407 to be described hereinafter. The optical head ex401 irradiates a laser spot in a recording surface of the recording medium ex215 that is an optical disk to write information, and detects reflected light from the recording surface of the recording medium ex215 to read the information. The modulation recording unit ex402 electrically drives a semiconductor laser included in the optical head ex401, and modulates the laser light according to recorded data. The reproduction demodulating unit ex403 amplifies a reproduction signal obtained by electrically detecting the reflected light from the recording surface using a photo detector included in the optical head ex401, and demodulates the reproduction signal by separating a signal component recorded on the recording medium ex215 to reproduce the necessary information. The buffer ex404 temporarily holds the information to be recorded on the recording medium ex215 and the information reproduced from the recording medium ex215. The disk motor ex405 rotates the recording medium ex215. The servo control unit ex406 moves the optical head ex401 to a predetermined information track while controlling the rotation drive of the disk motor ex405 so as to follow the laser spot. The system control unit ex407 controls overall the information reproducing/recording unit ex400. The reading and writing processes can be implemented by the system control unit ex407 using various information stored in the buffer ex404 and generating and adding new information as necessary, and by the modulation recording unit ex402, the reproduction demodulating unit ex403, and the servo control unit ex406 that record and reproduce information through the optical head ex401 while being operated in a coordinated manner. The system control unit ex407 includes, for example, a microprocessor, and executes processing by causing a computer to execute a program for read and write.

Although the optical head ex401 irradiates a laser spot in the description, it may perform high-density recording using near field light.

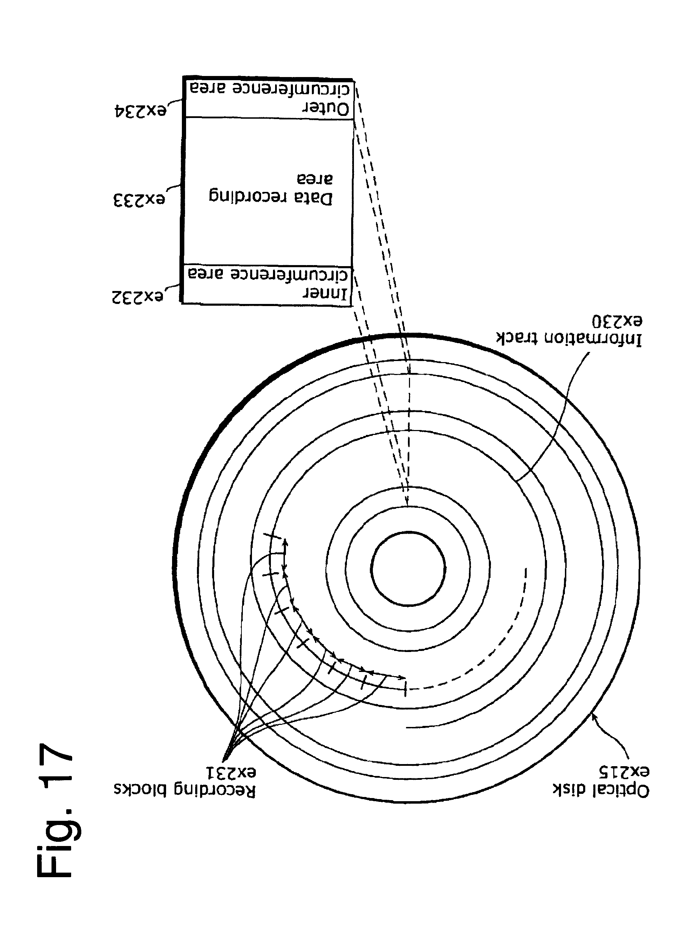

Figure 17 illustrates the recording medium ex215 that is the optical disk. On the recording surface of the recording medium ex215, guide grooves are spirally formed, and an information track ex230 records, in advance, address information indicating an absolute position on the disk according to change in a shape of the guide grooves. The address information includes information for determining positions of recording blocks ex231 that are a unit for recording data. Reproducing the information track ex230 and reading the address information in an apparatus that records and reproduces data can lead to determination of the positions of the recording blocks. Furthermore, the recording medium ex215 includes a data recording area ex233, an inner circumference area ex232, and an outer circumference area ex234. The data recording area ex233 is an area for use in recording the user data. The inner circumference area ex232 and the outer circumference area ex234 that are inside and outside of the data recording area ex233, respectively are for specific use except for recording the user data. The information reproducing/recording unit 400 reads and writes coded audio, coded video data, or multiplexed data obtained by multiplexing the coded audio and video data, from and on the data recording area ex233 of the recording medium ex215.

Although an optical disk having a layer, such as a DVD and a BD is described as an example in the description, the optical disk is not limited to such, and may be an optical disk having a multilayer structure and capable of being recorded on a part other than the surface. Furthermore, the optical disk may have a structure for multidimensional recording/reproduction, such as recording of information using light of colors with different wavelengths in the same portion of the optical disk and for recording information having different layers from various angles.

Furthermore, a car ex210 having an antenna ex205 can receive data from the satellite ex202 and others, and reproduce video on a display device such as a car navigation system ex211 set in the car ex210, in the digital broadcasting system ex200. Here, a configuration of the car navigation system ex211 will be a configuration, for example, including a GPS receiving unit from the configuration illustrated in Figure 15. The same will be true for the configuration of the computer ex111, the cellular phone ex114, and others.

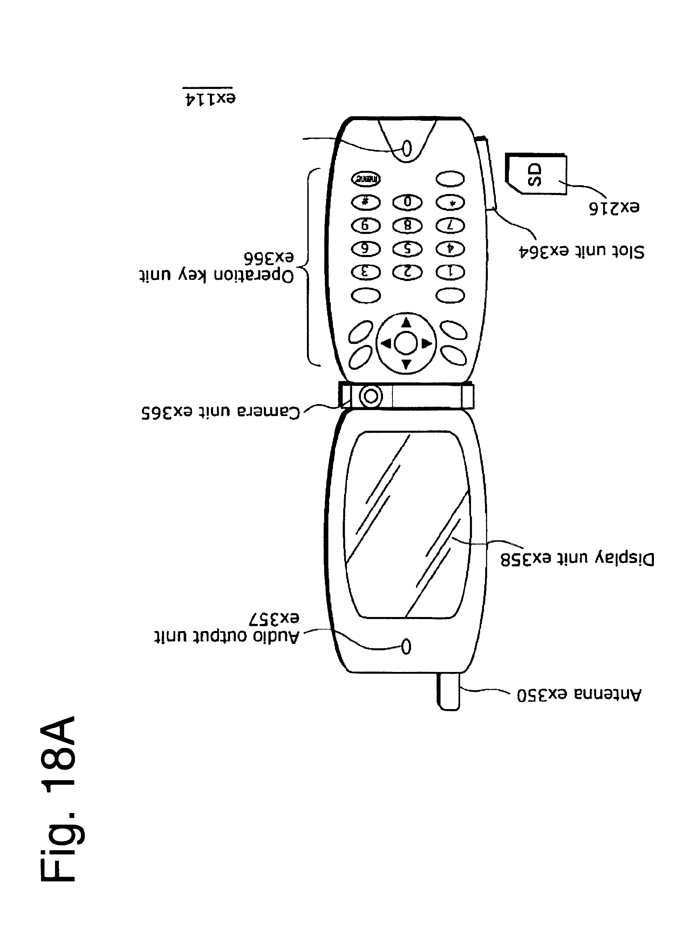

Figure 18A illustrates the cellular phone ex114 that uses the video coding method and the video decoding method described in embodiments. The cellular phone ex114 includes: an antenna ex350 for transmitting and receiving radio waves through the base station ex110; a camera unit ex365 capable of capturing moving and still images; and a display unit ex358 such as a liquid crystal display for displaying the data such as decoded video captured by the camera unit ex365 or received by the antenna ex350. The cellular phone ex114 further includes: a main body unit including an operation key unit ex366; an audio output unit ex357 such as a speaker for output of audio; an audio input unit ex356 such as a microphone for input of audio; a memory unit ex367 for storing captured video or still pictures, recorded audio, coded or decoded data of the received video, the still pictures, e-mails, or others; and a slot unit ex364 that is an interface unit for a recording medium that stores data in the same manner as the memory unit ex367.

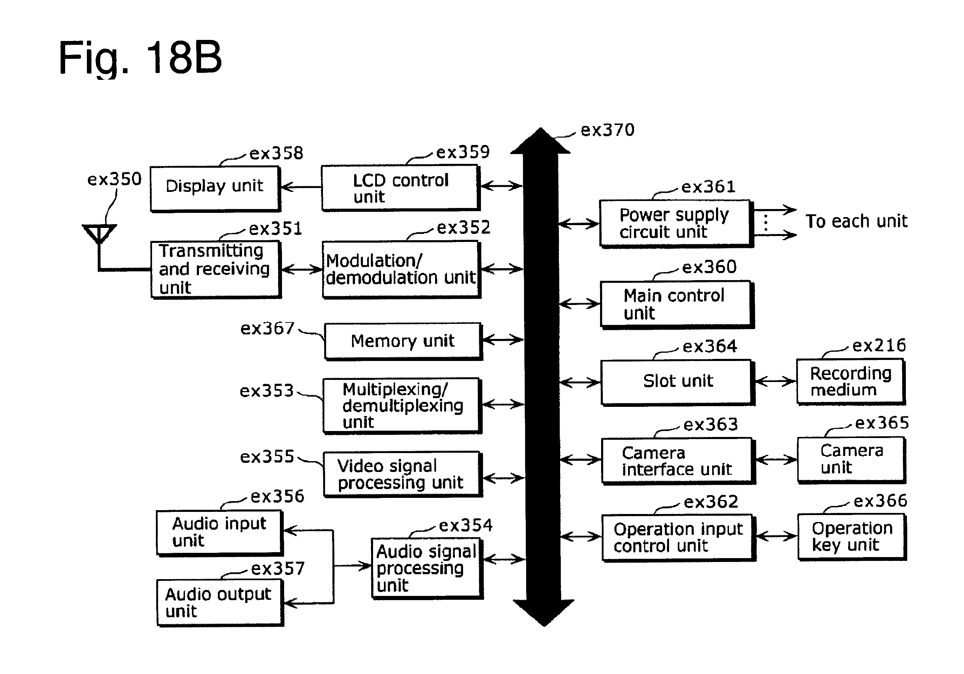

Next, an example of a configuration of the cellular phone ex114 will be described with reference to Figure18B. In the cellular phone ex114, a main control unit ex360 designed to control overall each unit of the main body including the display unit ex358 as well as the operation key unit ex366 is connected mutually, via a synchronous bus ex370, to a power supply circuit unit ex361, an operation input control unit ex362, a video signal processing unit ex355, a camera interface unit ex363, a liquid crystal display (LCD) control unit ex359, a modulation/demodulation unit ex352, a multiplexing/demultiplexing unit ex353, an audio signal processing unit ex354, the slot unit ex364, and the memory unit ex367.

When a call-end key or a power key is turned ON by a user's operation, the power supply circuit unit ex361 supplies the respective units with power from a battery pack so as to activate the cell phone ex114.

In the cellular phone ex114, the audio signal processing unit ex354 converts the audio signals collected by the audio input unit ex356 in voice conversation mode into digital audio signals under the control of the main control unit ex360 including a CPU, ROM, and RAM. Then, the modulation/demodulation unit ex352 performs spread spectrum processing on the digital audio signals, and the transmitting and receiving unit ex351 performs digital-to-analog conversion and frequency conversion on the data, so as to transmit the resulting data via the antenna ex350.

Also, in the cellular phone ex114, the transmitting and receiving unit ex351 amplifies the data received by the antenna ex350 in voice conversation mode and performs frequency conversion and the analog-to-digital conversion on the data. Then, the modulation/demodulation unit ex352 performs inverse spread spectrum processing on the data, and the audio signal processing unit ex354 converts it into analog audio signals, so as to output them via the audio output unit ex356.

Furthermore, when an e-mail in data communication mode is transmitted, text data of the e-mail inputted by operating the operation key unit ex366 and others of the main body is sent out to the main control unit ex360 via the operation input control unit ex362. The main control unit ex360 causes the modulation/demodulation unit ex352 to perform spread spectrum processing on the text data, and the transmitting and receiving unit ex351 performs the digital-to-analog conversion and the frequency conversion on the resulting data to transmit the data to the base station ex110 via the antenna ex350. When an e-mail is received, processing that is approximately inverse to the processing for transmitting an e-mail is performed on the received data, and the resulting data is provided to the display unit ex358.

When video, still images, or video and audio in data communication mode is or are transmitted, the video signal processing unit ex355 compresses and codes video signals supplied from the camera unit ex365 using the video coding method shown in each of embodiments, and transmits the coded video data to the multiplexing/demultiplexing unit ex353. In contrast, during when the camera unit ex365 captures video, still images, and others, the audio signal processing unit ex354 codes audio signals collected by the audio input unit ex356, and transmits the coded audio data to the multiplexing/demultiplexing unit ex353.

The multiplexing/demultiplexing unit ex353 multiplexes the coded video data supplied from the video signal processing unit ex355 and the coded audio data supplied from the audio signal processing unit ex354, using a predetermined method.

Then, the modulation/demodulation unit ex352 performs spread spectrum processing on the multiplexed data, and the transmitting and receiving unit ex351 performs digital-to-analog conversion and frequency conversion on the data so as to transmit the resulting data via the antenna ex350.

When receiving data of a video file which is linked to a Web page and others in data communication mode or when receiving an e-mail with video and/or audio attached, in order to decode the multiplexed data received via the antenna ex350, the multiplexing/demultiplexing unit ex353 demultiplexes the multiplexed data into a video data bit stream and an audio data bit stream, and supplies the video signal processing unit ex355 with the coded video data and the audio signal processing unit ex354 with the coded audio data, through the synchronous bus ex370. The video signal processing unit ex355 decodes the video signal using a video decoding method corresponding to the coding method shown in each of embodiments, and then the display unit ex358 displays, for instance, the video and still images included in the video file linked to the Web page via the LCD control unit ex359. Furthermore, the audio signal processing unit ex354 decodes the audio signal, and the audio output unit ex357 provides the audio.

Furthermore, similarly to the television ex300, a terminal such as the cellular phone ex114 probably have 3 types of implementation configurations including not only (i) a transmitting and receiving terminal including both a coding apparatus and a decoding apparatus, but also (ii) a transmitting terminal including only a coding apparatus and (iii) a receiving terminal including only a decoding apparatus. Although the digital broadcasting system ex200 receives and transmits the multiplexed data obtained by multiplexing audio data onto video data in the description, the multiplexed data may be data obtained by multiplexing not audio data but character data related to video onto video data, and may be not multiplexed data but video data itself.

As such, the video coding method and the video decoding method in each of embodiments can be used in any of the devices and systems described. Thus, the advantages described in each of embodiments can be obtained.

Furthermore, the present invention is not limited to embodiments, and various modifications and revisions are possible without departing from the scope of the present invention.

Video data can be generated by switching, as necessary, between (i) the video coding method or the video coding apparatus shown in each of embodiments and (ii) a video coding method or a video coding apparatus in conformity with a different standard, such as MPEG-2, H.264/AVC, and VC-1.

Here, when a plurality of video data that conforms to the different standards is generated and is then decoded, the decoding methods need to be selected to conform to the different standards. However, since to which standard each of the plurality of the video data to be decoded conform cannot be detected, there is a problem that an appropriate decoding method cannot be selected.

In order to solve the problem, multiplexed data obtained by multiplexing audio data and others onto video data has a structure including identification information indicating to which standard the video data conforms. The specific structure of the multiplexed data including the video data generated in the video coding method and by the video coding apparatus shown in each of embodiments will be hereinafter described. The multiplexed data is a digital stream in the MPEG2-Transport Stream format.

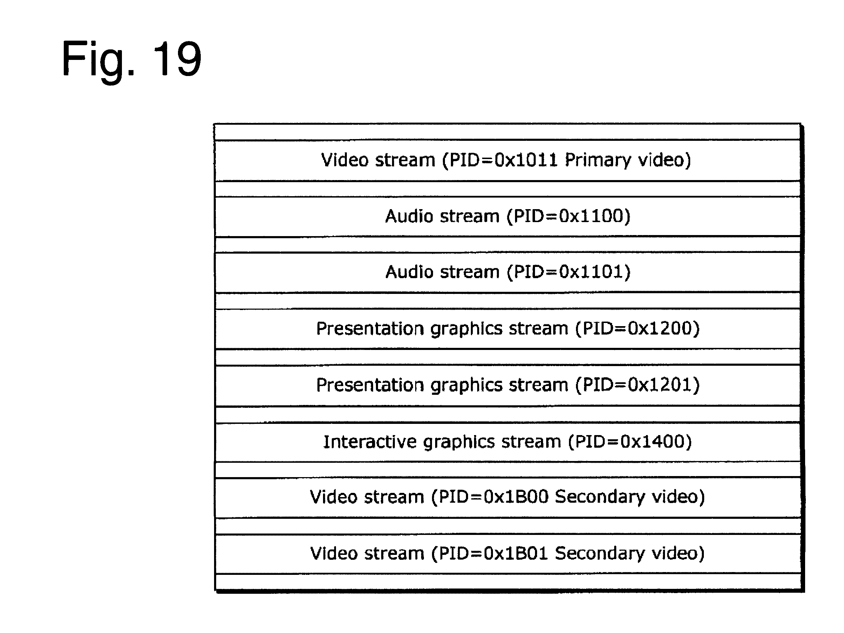

Figure 19 illustrates a structure of the multiplexed data. As illustrated in Figure 19, the multiplexed data can be obtained by multiplexing at least one of a video stream, an audio stream, a presentation graphics stream (PG), and an interactive graphics stream. The video stream represents primary video and secondary video of a movie, the audio stream (IG) represents a primary audio part and a secondary audio part to be mixed with the primary audio part, and the presentation graphics stream represents subtitles of the movie. Here, the primary video is normal video to be displayed on a screen, and the secondary video is video to be displayed on a smaller window in the primary video. Furthermore, the interactive graphics stream represents an interactive screen to be generated by arranging the GUI components on a screen. The video stream is coded in the video coding method or by the video coding apparatus shown in each of embodiments, or in a video coding method or by a video coding apparatus in conformity with a conventional standard, such as MPEG-2, H.264/AVC, and VC-1. The audio stream is coded in accordance with a standard, such as Dolby-AC-3, Dolby Digital Plus, MLP, DTS, DTS-HD, and linear PCM.

Each stream included in the multiplexed data is identified by PID. For example, 0x1011 is allocated to the video stream to be used for video of a movie, 0x1100 to 0x111F are allocated to the audio streams, 0x1200 to 0x121F are allocated to the presentation graphics streams, 0x1400 to 0x141F are allocated to the interactive graphics streams, 0x1B00 to 0x1B1F are allocated to the video streams to be used for secondary video of the movie, and 0x1A00 to 0x1A1F are allocated to the audio streams to be used for the secondary video to be mixed with the primary audio.

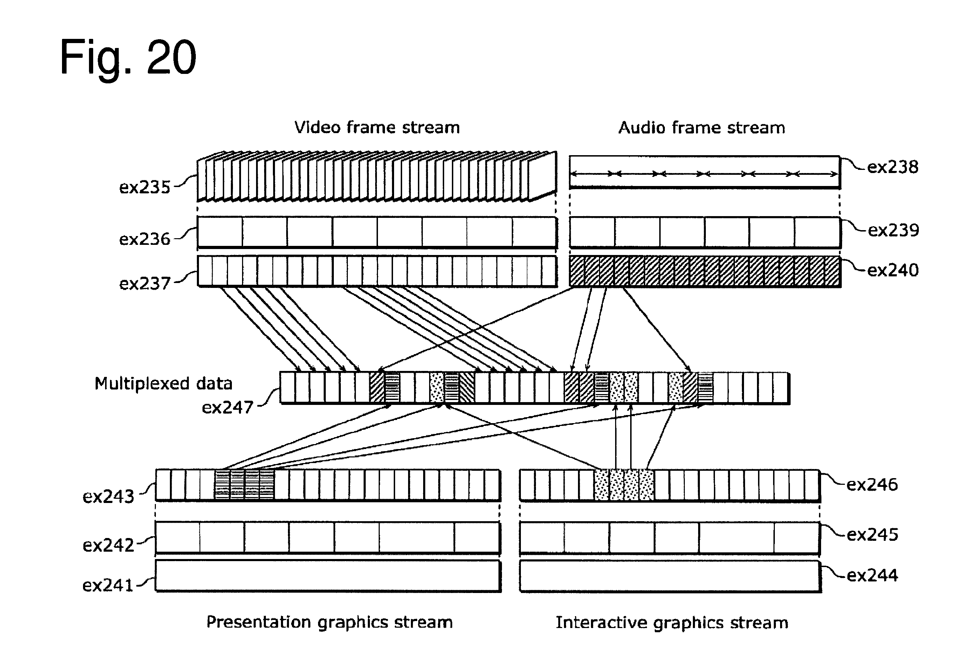

Figure 20 schematically illustrates how data is multiplexed. First, a video stream ex235 composed of video frames and an audio stream ex238 composed of audio frames are transformed into a stream of PES packets ex236 and a stream of PES packets ex239, and further into TS packets ex237 and TS packets ex240, respectively. Similarly, data of a presentation graphics stream ex241 and data of an interactive graphics stream ex244 are transformed into a stream of PES packets ex242 and a stream of PES packets ex245, and further into TS packets ex243 and TS packets ex246, respectively. These TS packets are multiplexed into a stream to obtain multiplexed data ex247.

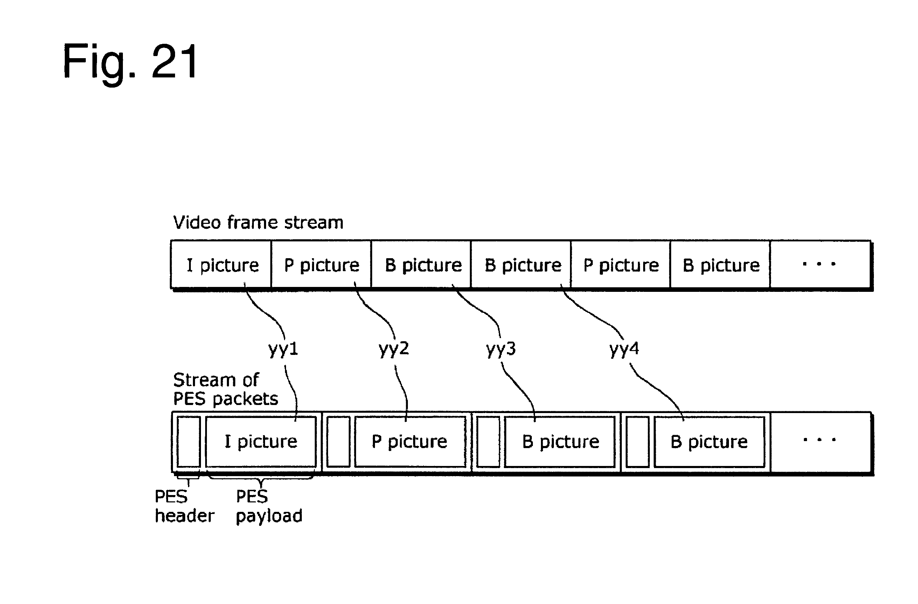

Figure 21 illustrates how a video stream is stored in a stream of PES packets in more detail. The first bar in Figure 21 shows a video frame stream in a video stream. The second bar shows the stream of PES packets. As indicated by arrows denoted as yy1, yy2, yy3, and yy4 in Figure 21, the video stream is divided into pictures as I pictures, B pictures, and P pictures each of which is a video presentation unit, and the pictures are stored in a payload of each of the PES packets. Each of the PES packets has a PES header, and the PES header stores a Presentation Time-Stamp (PTS) indicating a display time of the picture, and a Decoding Time-Stamp (DTS) indicating a decoding time of the picture.

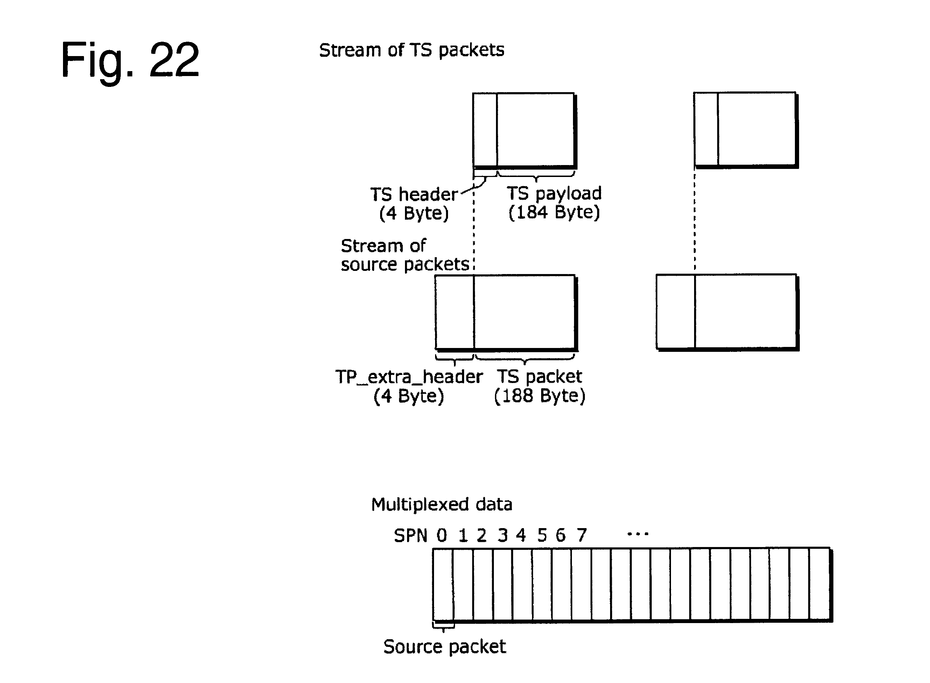

Figure 22 illustrates a format of TS packets to be finally written on the multiplexed data. Each of the TS packets is a 188-byte fixed length packet including a 4-byte TS header having information, such as a PID for identifying a stream and a 184-byte TS payload for storing data. The PES packets are divided, and stored in the TS payloads, respectively. When a BD ROM is used, each of the TS packets is given a 4-byte TP_Extra_Header, thus resulting in 192-byte source packets. The source packets are written on the multiplexed data. The TP_Extra_Header stores information such as an Arrival_Time_Stamp (ATS). The ATS shows a transfer start time at which each of the TS packets is to be transferred to a PID filter. The source packets are arranged in the multiplexed data as shown at the bottom of Figure 22. The numbers incrementing from the head of the multiplexed data are called source packet numbers (SPNs).

Each of the TS packets included in the multiplexed data includes not only streams of audio, video, subtitles and others, but also a Program Association Table (PAT), a Program Map Table (PMT), and a Program Clock Reference (PCR). The PAT shows what a PID in a PMT used in the multiplexed data indicates, and a PID of the PAT itself is registered as zero. The PMT stores PIDs of the streams of video, audio, subtitles and others included in the multiplexed data, and attribute information of the streams corresponding to the PIDs. The PMT also has various descriptors relating to the multiplexed data. The descriptors have information such as copy control information showing whether copying of the multiplexed data is permitted or not. The PCR stores STC time information corresponding to an ATS showing when the PCR packet is transferred to a decoder, in order to achieve synchronization between an Arrival Time Clock (ATC) that is a time axis of ATSs, and an System Time Clock (STC) that is a time axis of PTSs and DTSs.

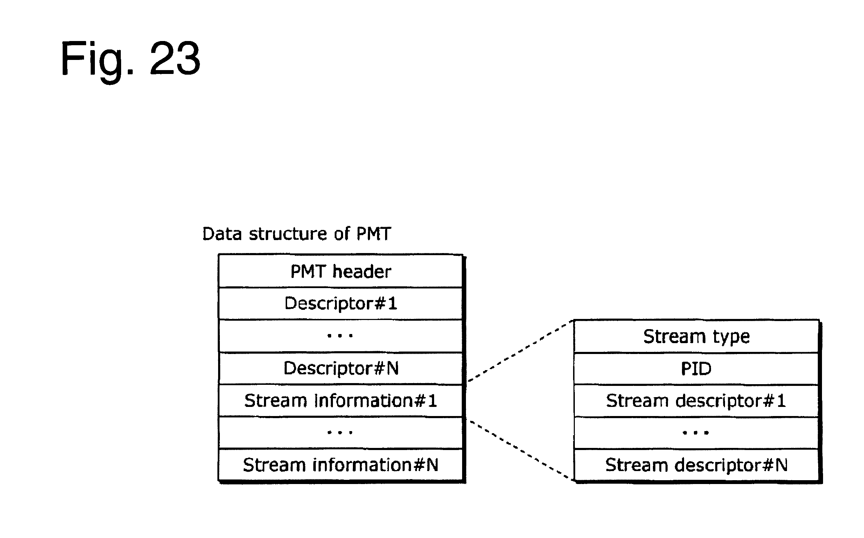

Figure 23 illustrates the data structure of the PMT in detail. A PMT header is disposed at the top of the PMT. The PMT header describes the length of data included in the PMT and others. A plurality of descriptors relating to the multiplexed data is disposed after the PMT header. Information such as the copy control information is described in the descriptors. After the descriptors, a plurality of pieces of stream information relating to the streams included in the multiplexed data is disposed. Each piece of stream information includes stream descriptors each describing information, such as a stream type for identifying a compression codec of a stream, a stream PID, and stream attribute information (such as a frame rate or an aspect ratio). The stream descriptors are equal in number to the number of streams in the multiplexed data.

When the multiplexed data is recorded on a recording medium and others, it is recorded together with multiplexed data information files.

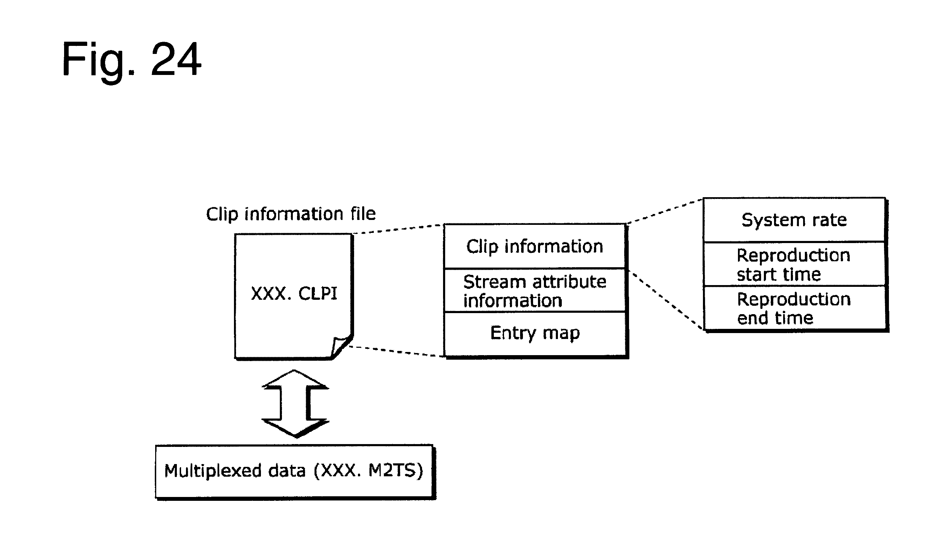

Each of the multiplexed data information files is management information of the multiplexed data as shown in Figure 24. The multiplexed data information files are in one to one correspondence with the multiplexed data, and each of the files includes multiplexed data information, stream attribute information, and an entry map.

As illustrated in Figure 24, the multiplexed data includes a system rate, a reproduction start time, and a reproduction end time. The system rate indicates the maximum transfer rate at which a system target decoder to be described later transfers the multiplexed data to a PID filter. The intervals of the ATSs included in the multiplexed data are set to not higher than a system rate. The reproduction start time indicates a PTS in a video frame at the head of the multiplexed data. An interval of one frame is added to a PTS in a video frame at the end of the multiplexed data, and the PTS is set to the reproduction end time.

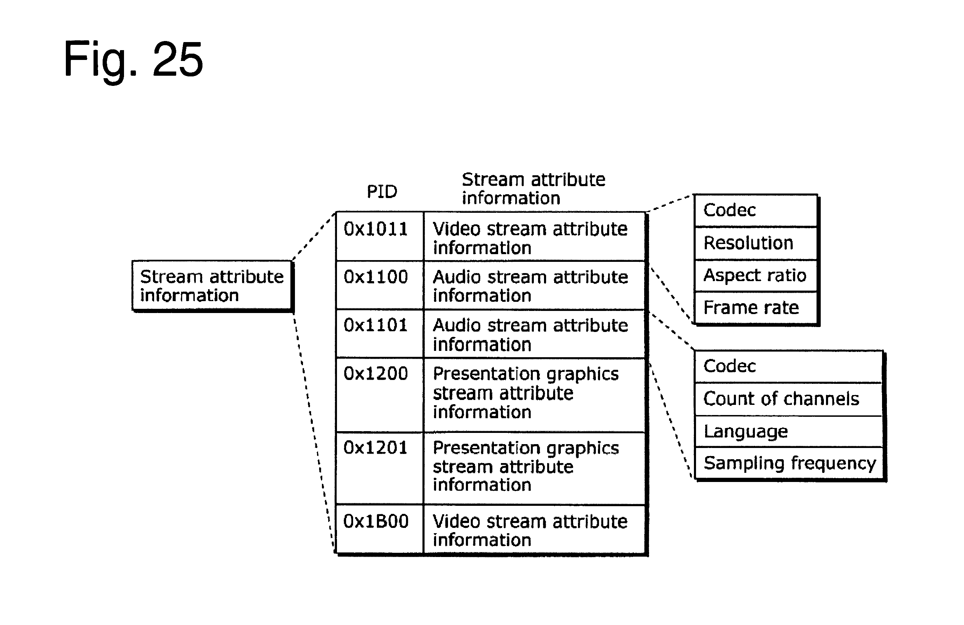

As shown in Figure 25, a piece of attribute information is registered in the stream attribute information, for each PID of each stream included in the multiplexed data. Each piece of attribute information has different information depending on whether the corresponding stream is a video stream, an audio stream, a presentation graphics stream, or an interactive graphics stream. Each piece of video stream attribute information carries information including what kind of compression codec is used for compressing the video stream, and the resolution, aspect ratio and frame rate of the pieces of picture data that is included in the video stream. Each piece of audio stream attribute information carries information including what kind of compression codec is used for compressing the audio stream, how many channels are included in the audio stream, which language the audio stream supports, and how high the sampling frequency is. The video stream attribute information and the audio stream attribute information are used for initialization of a decoder before the player plays back the information.

The multiplexed data to be used is of a stream type included in the PMT. Furthermore, when the multiplexed data is recorded on a recording medium, the video stream attribute information included in the multiplexed data information is used. More specifically, the video coding method or the video coding apparatus described in each of embodiments includes a step or a unit for allocating unique information indicating video data generated by the video coding method or the video coding apparatus in each of embodiments, to the stream type included in the PMT or the video stream attribute information. With the configuration, the video data generated by the video coding method or the video coding apparatus described in each of embodiments can be distinguished from video data that conforms to another standard.

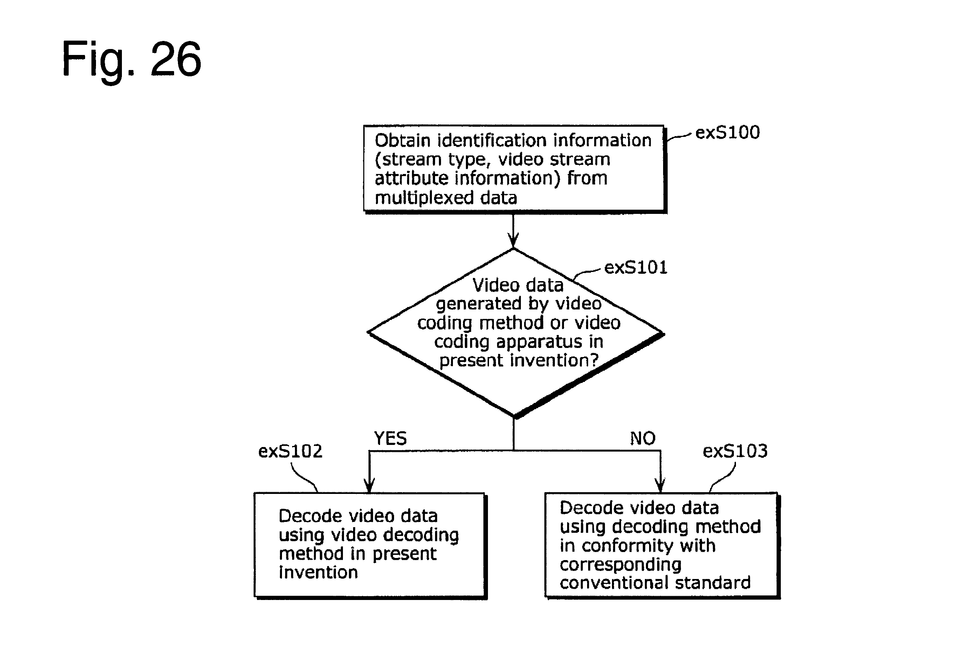

Furthermore, Figure 26 illustrates steps of the video decoding method. In Step exS100, the stream type included in the PMT or the video stream attribute information is obtained from the multiplexed data. Next, in Step exS101, it is determined whether or not the stream type or the video stream attribute information indicates that the multiplexed data is generated by the video coding method or the video coding apparatus in each of embodiments. When it is determined that the stream type or the video stream attribute information indicates that the multiplexed data is generated by the video coding method or the video coding apparatus in each of embodiments, in Step exS102, decoding is performed by the video decoding method in each of embodiments. Furthermore, when the stream type or the video stream attribute information indicates conformance to the conventional standards, such as MPEG-2, H.264/AVC, and VC-1, in Step exS103, decoding is performed by a video decoding method in conformity with the conventional standards.

As such, allocating a new unique value to the stream type or the video stream attribute information enables determination whether or not the video decoding method or the video decoding apparatus that is described in each of embodiments can perform decoding. Even when multiplexed data that conforms to a different standard, an appropriate decoding method or apparatus can be selected. Thus, it becomes possible to decode information without any error. Furthermore, the video coding method or apparatus, or the video decoding method or apparatus can be used in the devices and systems described above.

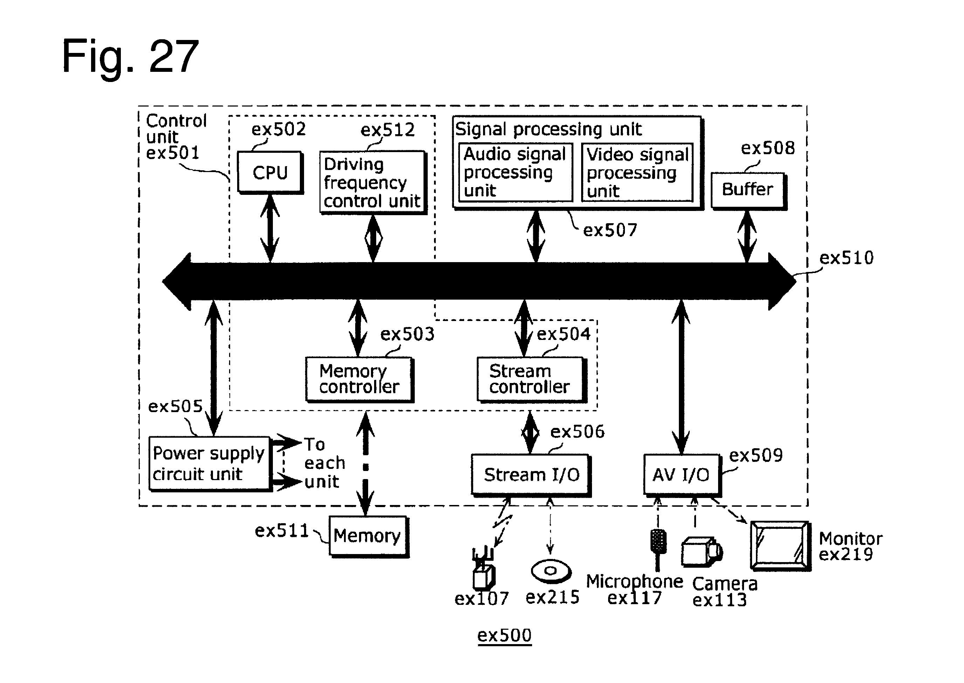

Each of the video coding method, the video coding apparatus, the video decoding method, and the video decoding apparatus in each of embodiments is typically achieved in the form of an integrated circuit or a Large Scale Integrated (LSI) circuit. As an example of the LSI, Figure 27 illustrates a configuration of the LSI ex500 that is made into one chip. The LSI ex500 includes elements ex501, ex502, ex503, ex504, ex505, ex506, ex507, ex508, and ex509 to be described below, and the elements are connected to each other through a bus ex510. The power supply circuit unit ex505 is activated by supplying each of the elements with power when the power supply circuit unit ex505 is turned on.

For example, when coding is performed, the LSI ex500 receives an AV signal from a microphone ex117, a camera ex113, and others through an AV IO ex509 under control of a control unit ex501 including a CPU ex502, a memory controller ex503, a stream controller ex504, and a driving frequency control unit ex512. The received AV signal is temporarily stored in an external memory ex511, such as an SDRAM. Under control of the control unit ex501, the stored data is segmented into data portions according to the processing amount and speed to be transmitted to a signal processing unit ex507. Then, the signal processing unit ex507 codes an audio signal and/or a video signal. Here, the coding of the video signal is the coding described in each of embodiments. Furthermore, the signal processing unit ex507 sometimes multiplexes the coded audio data and the coded video data, and a stream IO ex506 provides the multiplexed data outside. The provided multiplexed data is transmitted to the base station ex107, or written on the recording media ex215. When data sets are multiplexed, the data should be temporarily stored in the buffer ex508 so that the data sets are synchronized with each other.

Although the memory ex511 is an element outside the LSI ex500, it may be included in the LSI ex500. The buffer ex508 is not limited to one buffer, but may be composed of buffers. Furthermore, the LSI ex500 may be made into one chip or a plurality of chips.

Furthermore, although the control unit ex510 includes the CPU ex502, the memory controller ex503, the stream controller ex504, the driving frequency control unit ex512, the configuration of the control unit ex510 is not limited to such. For example, the signal processing unit ex507 may further include a CPU. Inclusion of another CPU in the signal processing unit ex507 can improve the processing speed. Furthermore, as another example, the CPU ex502 may serve as or be a part of the signal processing unit ex507, and, for example, may include an audio signal processing unit. In such a case, the control unit ex501 includes the signal processing unit ex507 or the CPU ex502 including a part of the signal processing unit ex507.

The name used here is LSI, but it may also be called IC, system LSI, super LSI, or ultra LSI depending on the degree of integration.

Moreover, ways to achieve integration are not limited to the LSI, and a special circuit or a general purpose processor and so forth can also achieve the integration. Field Programmable Gate Array (FPGA) that can be programmed after manufacturing LSIs or a reconfigurable processor that allows re-configuration of the connection or configuration of an LSI can be used for the same purpose.

In the future, with advancement in semiconductor technology, a brand-new technology may replace LSI. The functional blocks can be integrated using such a technology. The possibility is that the present invention is applied to biotechnology.

When video data generated in the video coding method or by the video coding apparatus described in each of embodiments is decoded, compared to when video data that conforms to a conventional standard, such as MPEG-2, H.264/AVC, and VC-1 is decoded, the processing amount probably increases. Thus, the LSI ex500 needs to be set to a driving frequency higher than that of the CPU ex502 to be used when video data in conformity with the conventional standard is decoded. However, when the driving frequency is set higher, there is a problem that the power consumption increases.

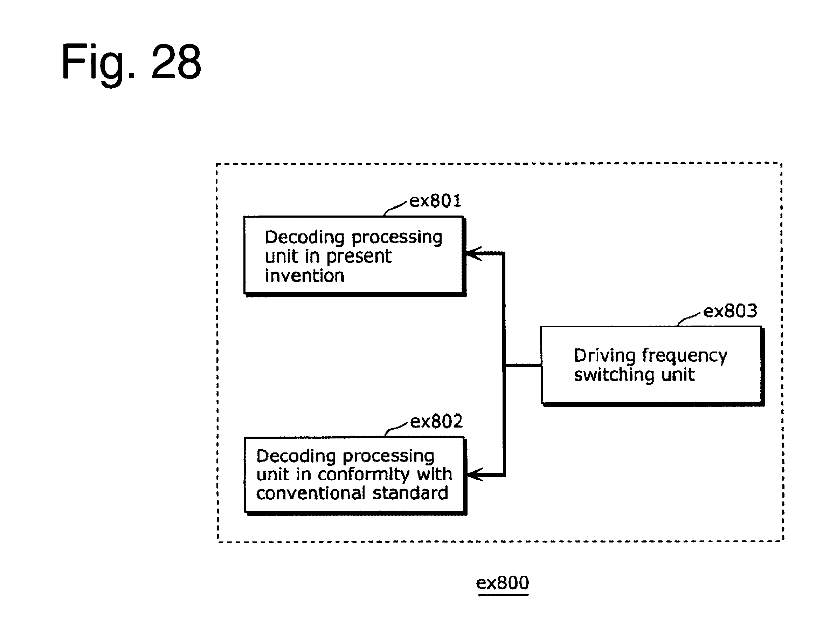

In order to solve the problem, the video decoding apparatus, such as the television ex300 and the LSI ex500 is configured to determine to which standard the video data conforms, and switch between the driving frequencies according to the determined standard. Figure 28 illustrates a configuration ex800. A driving frequency switching unit ex803 sets a driving frequency to a higher driving frequency when video data is generated by the video coding method or the video coding apparatus described in each of embodiments. Then, the driving frequency switching unit ex803 instructs a decoding processing unit ex801 that executes the video decoding method described in each of embodiments to decode the video data. When the video data conforms to the conventional standard, the driving frequency switching unit ex803 sets a driving frequency to a lower driving frequency than that of the video data generated by the video coding method or the video coding apparatus described in each of embodiments. Then, the driving frequency switching unit ex803 instructs the decoding processing unit ex802 that conforms to the conventional standard to decode the video data.

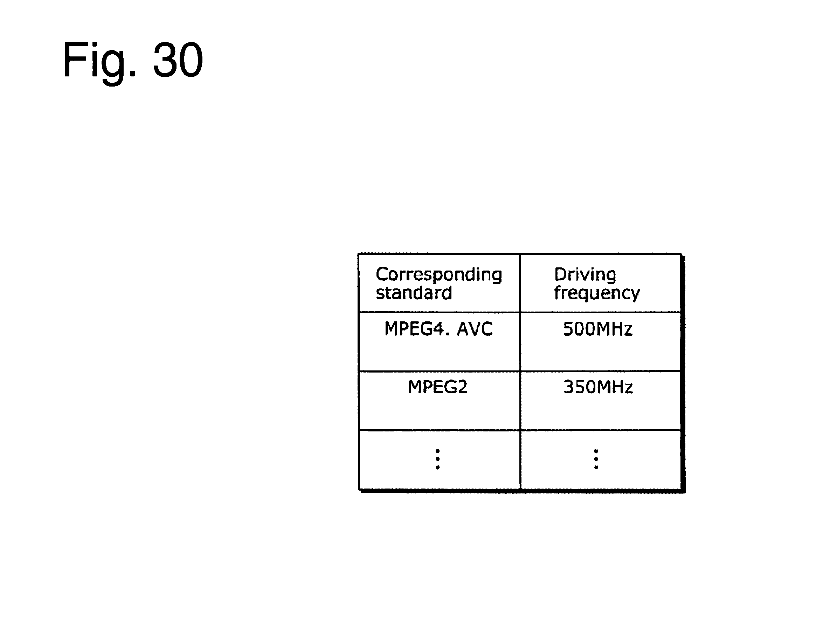

More specifically, the driving frequency switching unit ex803 includes the CPU ex502 and the driving frequency control unit ex512 in Figure 27. Here, each of the decoding processing unit ex801 that executes the video decoding method described in each of embodiments and the decoding processing unit ex802 that conforms to the conventional standard corresponds to the signal processing unit ex507 in Figure 25. The CPU ex502 determines to which standard the video data conforms. Then, the driving frequency control unit ex512 determines a driving frequency based on a signal from the CPU ex502. Furthermore, the signal processing unit ex507 decodes the video data based on the signal from the CPU ex502. For example, the identification information described is probably used for identifying the video data. The identification information is not limited to the one described above but may be any information as long as the information indicates to which standard the video data conforms. For example, when which standard video data conforms to can be determined based on an external signal for determining that the video data is used for a television or a disk, etc., the determination may be made based on such an external signal. Furthermore, the CPU ex502 selects a driving frequency based on, for example, a look-up table in which the standards of the video data are associated with the driving frequencies as shown in Figure 30. The driving frequency can be selected by storing the look-up table in the buffer ex508 and in an internal memory of an LSI, and with reference to the look-up table by the CPU ex502.

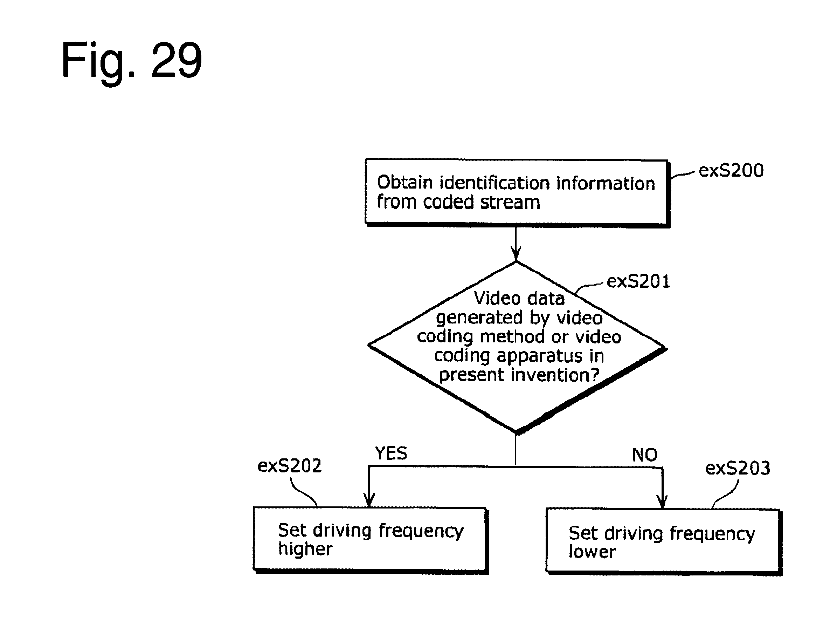

Figure 29 illustrates steps for executing a method. First, in Step exS200, the signal processing unit ex507 obtains identification information from the multiplexed data. Next, in Step exS201, the CPU ex502 determines whether or not the video data is generated by the coding method and the coding apparatus described in each of embodiments, based on the identification information. When the video data is generated by the video coding method and the video coding apparatus described in each of embodiments, in Step exS202, the CPU ex502 transmits a signal for setting the driving frequency to a higher driving frequency to the driving frequency control unit ex512. Then, the driving frequency control unit ex512 sets the driving frequency to the higher driving frequency. On the other hand, when the identification information indicates that the video data conforms to the conventional standard, such as MPEG-2, H.264/AVC, and VC-1, in Step exS203, the CPU ex502 transmits a signal for setting the driving frequency to a lower driving frequency to the driving frequency control unit ex512. Then, the driving frequency control unit ex512 sets the driving frequency to the lower driving frequency than that in the case where the video data is generated by the video coding method and the video coding apparatus described in each of embodiment.

Furthermore, along with the switching of the driving frequencies, the power conservation effect can be improved by changing the voltage to be applied to the LSI ex500 or an apparatus including the LSI ex500. For example, when the driving frequency is set lower, the voltage to be applied to the LSI ex500 or the apparatus including the LSI ex500 is probably set to a voltage lower than that in the case where the driving frequency is set higher.

Furthermore, when the processing amount for decoding is larger, the driving frequency may be set higher, and when the processing amount for decoding is smaller, the driving frequency may be set lower as the method for setting the driving frequency. Thus, the setting method is not limited to the ones described above. For example, when the processing amount for decoding video data in conformity with H.264/AVC is larger than the processing amount for decoding video data generated by the video coding method and the video coding apparatus described in each of embodiments, the driving frequency is probably set in reverse order to the setting described above.

Furthermore, the method for setting the driving frequency is not limited to the method for setting the driving frequency lower. For example, when the identification information indicates that the video data is generated by the video coding method and the video coding apparatus described in each of embodiments, the voltage to be applied to the LSI ex500 or the apparatus including the LSI ex500 is probably set higher. When the identification information indicates that the video data conforms to the conventional standard, such as MPEG-2, H.264/AVC, and VC-1, the voltage to be applied to the LSI ex500 or the apparatus including the LSI ex500 is probably set lower. As another example, when the identification information indicates that the video data is generated by the video coding method and the video coding apparatus described in each of embodiments, the driving of the CPU ex502 does not probably have to be suspended. When the identification information indicates that the video data conforms to the conventional standard, such as MPEG-2, H. 264/AVC, and VC-1, the driving of the CPU ex502 is probably suspended at a given time because the CPU ex502 has extra processing capacity. Even when the identification information indicates that the video data is generated by the video coding method and the video coding apparatus described in each of embodiments, in the case where the CPU ex502 has extra processing capacity, the driving of the CPU ex502 is probably suspended at a given time. In such a case, the suspending time is probably set shorter than that in the case where when the identification information indicates that the video data conforms to the conventional standard, such as MPEG-2, H.264/AVC, and VC-1.

Accordingly, the power conservation effect can be improved by switching between the driving frequencies in accordance with the standard to which the video data conforms. Furthermore, when the LSI ex500 or the apparatus including the LSI ex500 is driven using a battery, the battery life can be extended with the power conservation effect.

There are cases where a plurality of video data that conforms to different standards, is provided to the devices and systems, such as a television and a mobile phone. In order to enable decoding the plurality of video data that conforms to the different standards, the signal processing unit ex507 of the LSI ex500 needs to conform to the different standards. However, the problems of increase in the scale of the circuit of the LSI ex500 and increase in the cost arise with the individual use of the signal processing units ex507 that conform to the respective standards.

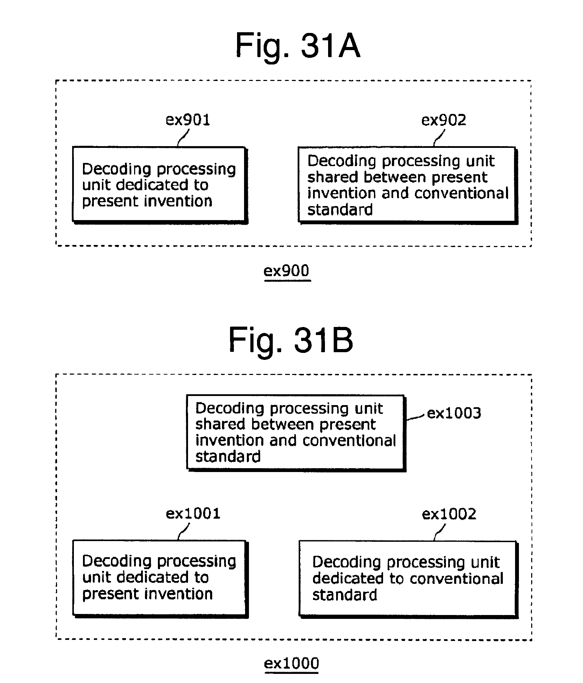

In order to solve the problem, what is conceived is a configuration in which the decoding processing unit for implementing the video decoding method described in each of embodiments and the decoding processing unit that conforms to the conventional standard, such as MPEG-2, H.264/AVC, and VC-1 are partly shared. Ex900 in Figure 31A shows an example of the configuration. For example, the video decoding method described in each of embodiments and the video decoding method that conforms to H.264/AVC have, partly in common, the details of processing, such as entropy coding, inverse quantization, deblocking filtering, and motion compensated prediction. The details of processing to be shared may include use of a decoding processing unit ex902 that conforms to H.264/AVC. In contrast, a dedicated decoding processing unit ex901 is probably used for other processing unique to the present invention. Since the present invention is characterized by application of interpolation filtering, for example, the dedicated decoding processing unit ex901 is used for interpolation filtering. Otherwise, the decoding processing unit is probably shared for one of the entropy decoding, inverse quantization, spatial or motion compensated prediction, or all of the processing. The decoding processing unit for implementing the video decoding method described in each of embodiments may be shared for the processing to be shared, and a dedicated decoding processing unit may be used for processing unique to that of H.264/AVC.

Furthermore, ex1000 in Figure 31B shows another example in that processing is partly shared. This example uses a configuration including a dedicated decoding processing unit ex1001 that supports the processing unique to the present invention, a dedicated decoding processing unit ex1002 that supports the processing unique to another conventional standard, and a decoding processing unit ex1003 that supports processing to be shared between the video decoding method in the present invention and the conventional video decoding method. Here, the dedicated decoding processing units ex1001 and ex1002 are not necessarily specialized for the processing of the present invention and the processing of the conventional standard, respectively, and may be the ones capable of implementing general processing. Furthermore, the configuration can be implemented by the LSI ex500.

As such, reducing the scale of the circuit of an LSI and reducing the cost are possible by sharing the decoding processing unit for the processing to be shared between the video decoding method in the present invention and the video decoding method in conformity with the conventional standard.

Most of the examples have been outlined in relation to an H.264/AVC based video coding system, and the terminology mainly relates to the H.264/AVC terminology. However, this terminology and the description of the various embodiments with respect to H.264/AVC based coding is not intended to limit the principles and ideas of the invention to such systems. Also the detailed explanations of the encoding and decoding in compliance with the H.264/AVC standard are intended to better understand the exemplary embodiments described herein and should not be understood as limiting the invention to the described specific implementations of processes and functions in the video coding. Nevertheless, the improvements proposed herein may be readily applied in the video coding described. Furthermore the concept of the invention may be also readily used in the enhancements of H.264/AVC coding currently discussed by the JCT-VC.

Summarizing, the present invention relates to a method for interpolation of sub-samples for encoding and decoding an image signal and to corresponding apparatuses therefore. In particular, the 1/8-pel positions are interpolated by filtering only the half-pel positions and the full-pel positions but not the quarter-pel positions. This provides higher uniformity of filtering and reduces the complexity of such an interpolation filtering.

## Claims

**1.** A method for interpolation of sub-pel positions in an image block of pixels, each pixel representing a full-pel position, the method comprising the steps of:

interpolating half-pel positions and/or quarter-pel positions in a block of pixels by filtering the values on full-pel positions in said block of pixels, and
interpolating each 1/8-pel position in said block of pixels by bilinear filtering of predefined full-pel positions and/or half-pel positions in said block of pixels.

**2.** The method according to claim 1 wherein the step of interpolating 1/8-pel positions includes the steps of:

interpolating each 1/8-pel position located in a same row with full-pel positions and/or half-pel positions by weighted averaging of two nearest positions in the same row, each of the two nearest positions being either a full-pel position or a half-pel position; and
interpolating each 1/8-pel position located in a same column with full-pel positions and/or half-pel positions by weighted averaging of two nearest positions in the same column, each of the two nearest positions being either a full-pel position or a half-pel position.

**3.** The method according to claim 1 or 2 wherein the step of interpolating 1/8-pel positions includes the step of:

interpolating each 1/8-pel position located in a same diagonal with full-pel positions and/or half-pel positions by weighted averaging of two nearest positions in the same diagonal, each of the two nearest positions being either a full-pel position or a half-pel position.

**4.** The method according to any of claims 1 to 3 wherein the step of interpolating 1/8-pel positions includes the step of:

interpolating each 1/8-position, which is located neither in same row, nor in same column, nor in same diagonal as any full-pel position and/or half-pel position, by weighted averaging of four nearest positions, each of the four nearest positions being either a full-pel position or a half-pel position.

**5.** The method according to any of claims 1 to 4 wherein
the step of interpolating half-pel positions and/or quarter-pel positions in the block of pixels is performed by using a separable adaptive interpolation filter; and
the step of interpolating each 1/8-pel position is performed based on already interpolated half-pel positions.

**6.** A method for decoding an image block in a video sequence of images from a bitstream comprising the steps of:

decoding from the bitstream a prediction error block and a motion vector with 1/8-pel resolution;
determining a prediction block by predicting the image block to be decoded as a block in a reference image on the position specified by the extracted motion vector,
including interpolating the sub-pel positions of blocks in the reference image using the method according to any of claims 1 to 5; and
reconstructing the image block by adding the prediction block and the prediction error block.

**7.** A method for encoding an image block in a video sequence of images to a bitstream comprising the steps of:

determining a prediction block by predicting the image block to be decoded as the best matching block in a reference image with 1/8-pel resolution, including interpolating the sub-pel positions of blocks in the reference image using the method according to any of claims 1 to 5; and
embedding into the bitstream the prediction error block and a motion vector with 1/8-pel resolution indicating the position of the prediction block within the reference frame.

**8.** A computer program product comprising a computer-readable medium having a computer-readable program code embodied thereon, the program code being adapted to carry out the method according to any of claims 1 to 7.

**9.** An apparatus for interpolation of sub-pel positions in an image block of pixels, each pixel representing a full-pel position, the apparatus comprising:

a first interpolation unit for interpolating half-pel positions and/or quarter-pel positions in a block of pixels by filtering the values on full-pel positions in said block of pixels, and
a 1/8-pel interpolation unit for interpolating each 1/8-pel position in said block of pixels by bilinear filtering of predefined full-pel positions and/or half-pel positions in said block of pixels.

**10.** The apparatus according to claim 9 wherein the 1/8-pel interpolation unit is configured to
interpolate each 1/8-pel position located in a same row with full-pel positions and/or half-pel positions by weighted averaging of two nearest positions in the same row, each of the two nearest positions being either a full-pel position or a half-pel position; and
interpolate each 1/8-pel position located in a same column with full-pel positions and/or half-pel positions by weighted averaging of two nearest positions in the same column, each of the two nearest positions being either a full-pel position or a half-pel position.

**11.** The apparatus according to claim 9 or 10 wherein the 1/8-pel interpolation unit is configured to:

interpolate each 1/8-pel position located in a same diagonal with full-pel positions and/or half-pel positions by weighted averaging of two nearest positions in the same diagonal, each of the two nearest positions being either a full-pel position or a half-pel position.

**12.** The apparatus according to any of claims 9 to 11 wherein the 1/8-pel interpolation unit is configured to:

interpolate each 1/8-position, which is located neither in same row, nor in same column, nor in same diagonal as any full-pel position and/or half-pel position, by weighted averaging of four nearest positions, each of the four nearest positions being either a full-pel position or a half-pel position.

**13.** The apparatus according to any of claims 9 to 12 wherein
the first interpolation unit is configured to interpolate half-pel positions and/or quarter-pel positions in the block of pixels by using a separable adaptive interpolation filter; and
the the 1/8-pel interpolation unit is configured to perform the 1/8-pel interpolation based on already interpolated half-pel positions.

**14.** An apparatus for decoding an image block in a video sequence of images from a bitstream, the apparatus comprising:

a decoder for decoding from the bitstream a prediction error block and a motion vector with 1/8-pel resolution;
a motion compensation unit for determining a prediction block by predicting the image block to be decoded as a block in a reference image on the position specified by the extracted motion vector, including an apparatus for interpolating the sub-pel positions of blocks in the reference image according to any of claims 9 to 13; and

a reconstructing unit for reconstructing the image block by adding the prediction block and the prediction error block.

**15.** An apparatus for encoding an image block in a video sequence of images to a bitstream comprising the steps of:

a motion compensation unit for determining a prediction block by predicting the image block to be decoded as the best matching block in a reference image with 1/8-pel resolution, including an apparatus for interpolating the sub-pel positions of blocks in the reference image according to any of claims 9 to 13; and
an encoder for embedding into the bitstream the prediction error block and a motion vector with 1/8-pel resolution indicating the position of the prediction block within the reference frame.

Fig. 1
Input Signal
105
Prediction Error
Prediction Signal
110
Transform / Quantization
Quantized Coefficients
120
inv. Quant. / inv. Transform
Quantized Prediction Error Signal
125
Reconstructed Signal
130
Deblocking Filter
Decoded Signal
140
Memory
150
Interpolation Filter
160
Motion Comp. Prediction
Motion Data
165
Motion Estimation
170
Intra-Frame Prediction
175
Intra / Inter
180
Post Filter Design
Post Filter Information
190
Entropy Coding
Encoded Signal
100

Fig. 2
Input Signal
290
Entropy Decoding
Post Filter Information
Quantized Prediction Error Signal
inv. Quant. / inv. Transform
220
225
Prediction Signal
Reconstructed Signal
230
Deblocking Filter
Decoded Signal
Post Filter
280
Output Signal
240
Memory
250
Interpolation Filter
Intra-Frame Prediction
270
Motion Comp. Prediction
260
Intra / Inter
275
Motion Data
200

310
320
A1
A2
A3
A4
A5
A6
B1
B2
B3
B4
B5
B6
C1
C2
C3
C4
C5
C6
D1
D2
D3
D4
D5
D6
E1
E2
E3
E4
E5
E6
F1
F2
F3
F4
F5
F6
Ca
Cb
Cc
Cd
Ce
Cf
Cg
Ch
Ci
Cj
Ck
Cl
Cm
Cn
Co

Fig. 3

C4
Cd'
Ch'
Cl'
D4
Cc
Cg
Ck
Co
Cc'
Cb
Cf
Cj
Cn
Cb'
Ca
Ce
Ci
Cm
Ca'
C3
Cd
Ch
Cl
D3
1
2

Fig. 4

Fig. 5

C3
E3a
Ca
Eab
Cb
Cc
C4
Ebf
Cd
Ce
Cf
Cg
Cd'
Efj
Ch
Ehi
Cl
Eij
Cj
Ck
Ch'
Cl
Cm
Cn
Co
Cl'
D3
Ca'
Cb'
Cc'
D4

Fig. 6

Fig. 7

Fig. 8

Fig. 9
Example: Ed = ((C3 + Ch)* 3 + Cb + Cj) >> 2
Full-pel sample
Quarter-pel sample
Eighth-pel sample
C3
C4
D3
D4
Ca
Cb
Cc
Cd
Ce
Cf
Cg
Ch
Ci
Cj
Ck
Cl
Cm
Cn
Co
Ca'
Cb'
Cc'
Cd'
Ch'
Cl'
Eae
Ede
Eef
Eei

1000A
video encoding
1010
interpolation
1020
motion estimation
1025
prediction
1030
encoding
1040
bitstream output
1000B
bitstream decoding
1050
bitstream extraction
1060
interpolation
1070
motion compensation
1075
prediction
1080
reconstruction
1090
image output


Fig. 10

Fig. 11
interpolation filtering (encoder)
1010
determine ½-pel and/or ¼-pel filter coefficients
1011
embed filter data into bitsream
1012
interpolate ½-pel and ¼-pel
1013
interpolate 1/8-pel: vertical/horizontal diagonal rest
1014
end
interpolation filtering (decoder)
1060
determine ½-pel and/or ¼-pel filter coefficients
1061
interpolate ½-pel and ¼-pel
1063
interpolate 1/8-pel: vertical/horizontal diagonal rest
1064
end
Fig. 12
transmitter
1201
channel
1202
receiver
1203

Streaming server ex103
Internet ex101
Internet service provider ex102
Telephone network ex104
ex106
ex107
ex108
ex109
ex110
LSI ex500
Camera ex116
Computer ex111
Game machine ex115
PDA ex112
Camera ex113
Cellular phone ex114
ex100

Fig. 13

Fig. 14
Broadcast station ex201
Cable ex203
Broadcast satellite ex202
Antenna ex204
ex214
Monitor ex213
Reproduction apparatus ex212
Cellular phone ex114
Antenna ex205
Car ex210
Car navigation system ex211
Monitor ex219
Television ex300
STB ex217
Reader/recorder ex218
ex200
ex215
SD
ex216

Fig. 15

ex220
ex218
ex216
SD
ex215
ex104
Telephone network
Operation input unit
ex312
Bridge
ex313
Slot unit
ex314
Driver
ex315
Modem
ex316
ex317
ex310
Control unit
ex309
ex307
Display unit
ex308
ex318
Buffer
ex319
Buffer
ex306
Audio signal processing unit
ex304
Video signal processing unit
ex305
ex320
Buffer
ex321
Buffer
ex303
Multiplexing/demultiplexing unit
ex302
Modulation/demodulation unit
ex301
Tuner
ex204
ex203
Power supply circuit unit
ex311
ex500
ex300

Fig. 16
ex500
ex404
Buffer
ex403
Reproduction demodulating unit
ex402
Modulation recording unit
ex407
System control unit
ex400
ex215
ex401
Optical head
ex406
Servo control unit
Disk motor
ex405

Fig. 17
Outer circumference area
ex234
Data recording area
ex233
Inner circumference area
ex232
Information track
ex230
Recording blocks
ex231
Optical disk
ex215

ex114
Operation key unit
ex366
Camera unit ex365
Audio output unit
ex357
Antenna ex350
Display unit ex358
Slot unit ex364
ex216
SD

Fig. 18A

# Fig. 18B

ex370
ex361
Power supply circuit unit
To each unit
ex360
Main control unit
ex364
Slot unit
ex216
Recording medium
ex363
Camera interface unit
ex365
Camera unit
ex362
Operation input control unit
ex366
Operation key unit
ex359
LCD control unit
ex358
Display unit
ex352
Modulation/ demodulation unit
ex351
Transmitting and receiving unit
ex350
ex367
Memory unit
ex353
Multiplexing/ demultiplexing unit
ex355
Video signal processing unit
ex354
Audio signal processing unit
ex356
Audio input unit
ex357
Audio output unit

Fig. 19

Video stream (PID=0x1011 Primary video)

Audio stream (PID=0x1100)

Audio stream (PID=0x1101)

Presentation graphics stream (PID=0x1200)

Presentation graphics stream (PID=0x1201)

Interactive graphics stream (PID=0x1400)

Video stream (PID=0x1B00 Secondary video)

Video stream (PID=0x1B01 Secondary video)

Fig. 20

Video frame stream
Audio frame stream
ex235
ex236
ex237
ex238
ex239
ex240
Multiplexed data
ex247
ex243
ex242
ex241
ex246
ex245
ex244
Presentation graphics stream
Interactive graphics stream

Fig. 21

Video frame stream
I picture
P picture
B picture
B picture
P picture
B picture
...
yy1
yy2
yy3
yy4
Stream of PES packets
I picture
P picture
B picture
B picture
...
PES header
PES payload

Stream of TS packets
TS header (4 Byte)
TS payload (184 Byte)
Stream of source packets
TP_extra_header (4 Byte)
TS packet (188 Byte)
Multiplexed data
SPN 0 1 2 3 4 5 6 7
...
Source packet

Fig. 22

Fig. 23

Data structure of PMT
PMT header
Descriptor#1
...
Descriptor#N
Stream information#1
...
Stream information#N
Stream type
PID
Stream descriptor#1
...
Stream descriptor#N

Fig. 24

Clip information file
XXX. CLPI
Clip information
Stream attribute information
Entry map
System rate
Reproduction start time
Reproduction end time
Multiplexed data (XXX. M2TS)

Fig. 25

Stream attribute information
PID
Stream attribute information
0x1011
Video stream attribute information
0x1100
Audio stream attribute information
0x1101
Audio stream attribute information
0x1200
Presentation graphics stream attribute information
0x1201
Presentation graphics stream attribute information
0x1B00
Video stream attribute information
Codec
Resolution
Aspect ratio
Frame rate
Codec
Count of channels
Language
Sampling frequency

Fig. 26

Obtain identification information (stream type, video stream attribute information) from multiplexed data
exS100
Video data generated by video coding method or video coding apparatus in present invention?
exS101
YES
NO
Decode video data using video decoding method in present invention
exS102
Decode video data using decoding method in conformity with corresponding conventional standard
exS103

Fig. 27

Control unit ex501
ex502
CPU
ex512
Driving frequency control unit
Signal processing unit
Audio signal processing unit
Video signal processing unit
ex507
ex508
Buffer
ex510
ex503
Memory controller
ex504
Stream controller
ex505
Power supply circuit unit
To each unit
ex506
Stream I/O
ex509
AV I/O
ex511
Memory
ex107
ex215
Microphone ex117
Camera ex113
Monitor ex219
ex500

Fig. 28

ex803
Driving frequency switching unit
ex801
Decoding processing unit in present invention
ex802
Decoding processing unit in conformity with conventional standard
ex800

Fig. 29

exS200
Obtain identification information from coded stream
exS201
Video data generated by video coding method or video coding apparatus in present invention?
YES
NO
exS202
Set driving frequency higher
exS203
Set driving frequency lower

Fig. 30

| Corresponding standard | Driving frequency |
|---|---|
| MPEG4. AVC | 500MHz |
| MPEG2 | 350MHz |
| ⋮ | ⋮ |

Fig. 31A
ex901
Decoding processing unit dedicated to present invention
ex902
Decoding processing unit shared between present invention and conventional standard
ex900
Fig. 31B
ex1003
Decoding processing unit shared between present invention and conventional standard
ex1001
Decoding processing unit dedicated to present invention
ex1002
Decoding processing unit dedicated to conventional standard
ex1000

Europäisches
Patentamt
European
Patent Office
Office européen
des brevets

# EUROPEAN SEARCH REPORT

Application Number
EP 10 00 3872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARTA KARCZEWICZ ET AL: "Interpolation Solution with Low Encoder Memory Requirements and Low Decoder Complexity" ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. VCEG-N31r1, 1 October 2001 (2001-10-01), XP030003281 | 1-3,9-11 | INV. H04N7/26 |
| Y | * point 1 'Introduction' * | 5-8, 13-15 | |
| A | * point 2 '1/4 Pel Resolution Interpolation' * * point 3 '1/8 Pel Resolution Interpolation' * | 4,12 | |
| X | WO 2008/123753 A1 (LG ELECTRONICS INC [KR]; JEON YONG JOON [KR]; JEON BYEONG MOON [KR]; P) 16 October 2008 (2008-10-16) | 1-3,9-11 | |
| Y | * page 64, line 15 - page 65, line 19 * | 5-8, 13-15 | TECHNICAL FIELDS SEARCHED (IPC) |
| A | | 4,12 | H04N |
| X | HOYOUNG CHANG ET AL: "Design of luma and chroma sub-pixel interpolator for H.264 fractional motion estimation" TENCON 2009 - 2009 IEEE REGION 10 CONFERENCE, IEEE, PISCATAWAY, NJ, USA, 23 January 2009 (2009-01-23), pages 1-5, XP031617440 ISBN: 978-1-4244-4546-2 | 1-3,9-11 | |
| Y | * points II.A and II.B * | 5-8, 13-15 | |
| A | | 4,12 | |
| Y,D | EP 1 983 759 A1 (MATSUSHITA ELECTRIC INDUSTRIAL CO., LTD) 22 October 2008 (2008-10-22) * paragraph [0023] * | 5-8, 13-15 | |

The present search report has been drawn up for all claims

| Place of search | Date of completion of the search | Examiner |
|---|---|---|
| Munich | 22 September 2010 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 00 3872

This annex lists the patent family members relating to the patent documents cited in the above-mentioned European search report. The members are as contained in the European Patent Office EDP file on
The European Patent Office is in no way liable for these particulars which are merely given for the purpose of information.

22-09-2010

| Patent document cited in search report | Publication date | Patent family member(s) | Publication date |
|---|---|---|---|
| WO 2008123753 A1 | 16-10-2008 | EP 2153660 A1 | 17-02-2010 |
| | | JP 2010524383 T | 15-07-2010 |
| | | KR 20100015456 A | 12-02-2010 |
| | | US 2010215101 A1 | 26-08-2010 |
| EP 1983759 A1 | 22-10-2008 | CN 101663898 A | 03-03-2010 |
| | | EP 2141931 A1 | 06-01-2010 |
| | | WO 2008132828 A1 | 06-11-2008 |
| | | KR 20100015651 A | 12-02-2010 |
| | | US 2010135398 A1 | 03-06-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1983759 A


### Non-patent literature cited in the description


- Adaptive Filter Theory. **S. HAYKIN.** Prentice Hall Information and System Sciences Series. Prentice Hall, 2002
- **S. WITTMANN ; T. WEDI.** Separable adaptive interpolation filter for video coding. *Proc. ICIP2008, IEEE International Conference on Image Processing,* October 2008